(19) Europäisches Patentamt
European Patent Office
Office européen des brevets

(11) **EP 1 507 137 B1**

(12) **EUROPÄISCHE PATENTSCHRIFT**

(45) Veröffentlichungstag und Bekanntmachung des Hinweises auf die Patenterteilung:
**15.02.2012  Patentblatt 2012/07**

(51) Int Cl.:
*G01N 21/21* *(2006.01)*    *G01J 4/04* *(2006.01)*
*G02B 5/30* *(2006.01)*

(21) Anmeldenummer: **04012448.9**

(22) Anmeldetag: **26.05.2004**

(54) **Verfahren und Vorrichtung zur polarisationsabhängigen und ortsaufgelösten Untersuchung einer Oberfläche oder einer Schicht**

Method and apparatus for polarisation dependent and spatially resolved inspection of a surface or layer

Procédé et dispositif pour l'inspection dépendante de la polarisation et pour l'inspection par résolution spatiale d'une surface ou d'une couche

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.08.2003   DE 10337040**

(43) Veröffentlichungstag der Anmeldung:
**16.02.2005   Patentblatt 2005/07**

(73) Patentinhaber: **SICK AG**
**79183 Waldkirch (DE)**

(72) Erfinder: **Blöhbaum, Frank**
**79112 Freiburg (DE)**

(74) Vertreter: **Manitz, Finsterwald & Partner GbR**
**Postfach 31 02 20**
**80102 München (DE)**

(56) Entgegenhaltungen:
EP-A- 0 987 537    DE-A- 19 621 512
JP-A- 9 178 669    JP-A- 58 009 051
US-A- 5 828 500    US-A- 5 850 284

**Beschreibung**

Die vorliegende Erfindung betrifft eine Vorrichtung zur Untersuchung einer Oberfläche oder einer Schicht.

Verfahren zur Untersuchung von Oberflächen oder Schichten sind grundsätzlich bekannt. Insbesondere kann zur berührungslosen Untersuchung von Oberflächen oder Schichten optische Strahlung verwendet werden. Beispielsweise können das Reflexionsvermögen einer Oberfläche oder das Transmissionsvermögen einer Schicht untersucht werden, um Rückschlüsse auf die Qualität der Oberfläche oder der Schicht zu ziehen. Diese Eigenschaften können insbesondere auch spektral aufgelöst, das heißt wellenlängenabhängig erfasst werden. Um mögliche Inhomogenitäten in der Oberfläche oder der Schicht erkennen zu können, ist es dabei wünschenswert, diese Eigenschaften ortsaufgelöst, das heißt in Abhängigkeit vom Ort auf der Oberfläche, zu erfassen.

Es gibt jedoch lokal variierende Oberflächen bzw. Schichteigenschaften, die sich nicht in einem veränderten Absorptions-, Reflexions- oder Transmissionsverhalten niederschlagen. Zur lokal aufgelösten Untersuchung solcher Eigenschaften müssen daher bislang gegebenenfalls sehr aufwändige Untersuchungsmethoden herangezogen werden, die sich insbesondere nicht für den routinemäßigen Einsatz eignen.

US 5,850,284 beschreibt eine Vorrichtung zum Nachweis einer polarisationsverändernden Substanz auf einer Oberfläche mit einer Quelle für polarisierte optische Strahlung zur Abgabe von Beleuchtungsstrahlung auf die Oberfläche und einer Detektionseinrichtung zur Erfassung einer Polarisationseigenschaft.

US 5,828,500 ist auf eine Vorrichtung gerichtet, mit der optische Elemente untersucht werden können. Polarisiertes Licht kommt aus einem Lichtleiter und wird mit Hilfe eines Polarisators polarisiert. Ein zu prüfendes Element, zum Beispiel eine Linse, wird durchstrahlt. Mit Hilfe eines weiteren Polarisators und einer CCD-Kamera wird das auf diese Weise im Durchlicht erzeugte Bild aufgenommen und mit Bildverarbeitungsprozessen untersucht. Eine Einrichtung dient zum Vergleich eines aus einem charakteristischen Muster abgeleiteten numerischen Wertes mit einem Referenzwert.

JP 58 009051 A und JP 09 178669 A offenbaren eine Oberflächenuntersuchungsvorrichtung, bei der polarisierte Strahlung auf eine Oberfläche gesendet wird und das Bild mit Referenzwerten verglichen wird.

Eine Vorrichtung mit den Merkmalen des Oberbegriffs des Anspruchs 1 ist aus EP-A-0 987 537 bekannt.

Der vorliegenden Erfindung liegt daher die Aufgabe zugrunde, eine verbesserte und einfach herstellbare neue Vorrichtung zur Untersuchung von Oberflächen oder Schichten bereitzustellen, mittels derer einfach ortsaufgelöst eine Oberfläche oder Schicht untersuchbar ist.

Die Aufgabe wird gelöst durch eine Vorrichtung zur Untersuchung einer Oberfläche oder einer Schicht mit den Merkmalen des Anspruchs 1.

Die erfindungsgemäße Vorrichtung zur Untersuchung einer Oberfläche oder einer Schicht umfasst eine Quelle für polarisierte optische Strahlung zur Abgabe von Beleuchtungsstrahlung auf die Oberfläche oder Schicht und eine Detektionseinrichtung zur im Wesentlichen gleichzeitigen, ortsaufgelösten Erfassung wenigstens einer Polarisationseigenschaft der von der Oberfläche als Messstrahlung zurückgeworfenen bzw. von der Schicht als Messstrahlung abgegebenen optischen Strahlung.

Die Vorrichtung kann, insbesondere da sie berührungslos arbeitet, zu Untersuchung beliebiger Oberflächen, beispielsweise von festen Körpern oder Flüssigkeiten verwendet werden.

Die Vorrichtung kann weiterhin zur Untersuchung beliebiger, insbesondere dünner, Schichten aus beispielsweise festen oder flüssigen Materialien bzw. Stoffen verwendet werden. Insbesondere können auch Folien untersucht werden.

Mit der erfindungsgemäßen Vorrichtung wird also eine zu untersuchende Oberfläche oder Schicht mit polarisierter optischer Strahlung als Beleuchtungsstrahlung bestrahlt. Unter optischer Strahlung wird dabei elektromagnetische Strahlung im infraroten und/oder sichtbaren und/oder ultravioletten Bereich des elektromagnetischen Spektrums verstanden. Die verwendete optische Strahlung kann dabei, je nach zu untersuchender Oberfläche bzw. Schicht, monochromatisch sein oder einen ganzen Wellenlängenbereich umfassen. Die polarisierte Strahlung kann weiterhin grundsätzlich einen beliebigen vorgegebenen Polarisationszustand innehaben. Beispielsweise kann zirkular oder elliptisch polarisierte optische Strahlung verwendet werden, jedoch ist die verwendete optische Strahlung bevorzugt linear polarisiert. Die Beleuchtungsstrahlung kann dabei kontinuierlich oder gepulst abgestrahlt werden.

Die erfindungsgemäße Vorrichtung weist zur Bereitstellung der polarisierten optischen Strahlung die Quelle für polarisierte optische Strahlung auf, die beispielsweise eine Quelle für unpolarisierte optische Strahlung und einen in deren Strahlengang nachgeordneten Polarisationsfilter umfassen kann. Vorzugsweise werden jedoch Laser verwendet, mittels derer, insbesondere linear, polarisierte optische Strahlung abgebbar ist.

Der Quelle für polarisierte optische Strahlung kann im Beleuchtungsstrahlengang insbesondere noch eine Beleuchtungsoptik mit strahlumlenkenden, brechenden und/oder diffraktiven optischen Bauelementen nachgeordnet sein, um die von der Quelle abgegebene polarisierte optische Strahlung auf die Oberfläche oder die Schicht zu fokussieren bzw. zu lenken. Vorzugsweise wird Beleuchtungsstrahlung in Form eines Beleuchtungsstrahlenbündels verwendet.

Die polarisierte Beleuchtungsstrahlung wird auf die Oberfläche oder Schicht gestrahlt. Bei Untersuchung einer Oberfläche, bei der die optische Strahlung nicht wesentlich in die Oberfläche eindringt, wird die optische Strahlung wenigstens teilweise zurückgeworfen. Je nach Art der Oberfläche kann dabei Reflexion oder auch nur eine Rückstreuung der Strahlung auftreten.

Bei der Untersuchung einer Schicht dringt die optische Strahlung durch eine Vorderseite der Schicht in die für die verwendete optische Strahlung wenigstens etwas transparente Schicht ein, wobei sie an der Oberfläche der Schicht gegebenenfalls teilweise reflektiert oder zurückgestreut werden kann. Bei Erreichen der der Vorderseite gegenüberliegenden Rückseite, kann je nach Material hinter der Schicht, die optische Strahlung aus der Schicht austreten und so zur weiteren Untersuchung abgegeben werden. Es ist jedoch auch möglich, dass die optische Strahlung wenigstens teilweise an der Rückseite reflektiert wird und nach einer weiteren Durchquerung der Schicht wieder an der Vorderseite austritt und so von der Schicht abgegeben wird. Schließlich ist es möglich, dass die Schicht das Beleuchtungsstrahlenbündel durch Streuung in der Schicht wenigstens teilweise zurückwirft und so wieder abgibt. Der zurückgeworfene oder der transmittierte Anteil der Beleuchtungsstrahlung kann als von der Schicht abgegebene Strahlung verwendet werden.

Bei der Wechselwirkung mit der Oberfläche und/oder der Schicht kann abhängig von den Materialeigenschaften und/oder der Topographie der Oberfläche bzw. Schicht der Polarisationszustand der polarisierten Beleuchtungsstrahlung verändert werden. Beispielsweise kann neben anderen von dem Polarisationszustand unabhängigen oder abhängigen Effekten die Polarisationsebene von linear polarisierter Beleuchtungsstrahlung gedreht werden. Die Beleuchtungsstrahlung wird daher, gegebenenfalls durch die Wechselwirkung mit der Oberfläche bzw. Schicht verändert, insbesondere gegebenenfalls mit lokal variierender Änderung des Polarisationszustands und/oder der Intensität, als Messstrahlung von der Oberfläche zurückgeworfen bzw. von der Schicht abgegeben.

Das Spektrum der Messstrahlung braucht nicht mit dem der Beleuchtungsstrahlung übereinzustimmen, sondern kann beispielsweise bei spektral abhängiger Absorption einen schmaleren Wellenlängenbereich umfassen.

Weiterhin kann die Messstrahlung bei Beleuchtung mit einem Beleuchtungsstrahlenbündel in Form eines Messstrahlenbündels zurückgeworfen werden.

Die erfindungsgemäße Vorrichtung ist ausgestaltet, dann im Wesentlichen gleichzeitig wenigstens eine Polarisationseigenschaft der von der Oberfläche als Messstrahlung zurückgeworfenen bzw. von der Schicht als Messstrahlung abgegebenen optischen Strahlung zu erfassen. Dabei kann vorzugsweise ein Wert für die Polarisationseigenschaft der Messstrahlung erfasst werden. Bei der wenigstens einen Polarisationseigenschaft kann es sich bevorzugt um den Polarisationsgrad der Messstrahlung und/oder die Lage der Polarisationsebene des Messstrahlung oder eine, vorzugsweise umkehrbare, Funktion dieser Größen handeln. Insbesondere bei der Ermittlung der Lage der Polarisationsebene genügt es dabei grundsätzlich, dass Werte ermittelt werden, die einen eindeutigen Rückschluss auf einen Winkel zwischen der Polarisationsrichtung der Beleuchtungsstrahlung bzw. der Richtung der Oberfläche und der Polarisationsebene der Messstrahlung erlauben. Eine ausdrückliche Winkelangabe ist daher nicht unbedingt notwendig.

Erfindungsgemäß erfolgt die Erfassung der Polarisationseigenschaft im Wesentlichen gleichzeitig, worunter verstanden wird, dass die Polarisationseigenschaft in im Wesentlichen einem Schritt für alle Orte im Untersuchungsgebiet erfasst wird. Zur Erfassung der Polarisationseigenschaft wird ein Feld von Photodetektionselementen verwendet, wobei gegebenenfalls geringe zeitliche Unterschiede zwischen den Erfassungs- oder Auslesezeiten der einzelnen Photodetektionselement des Feldes auftreten können. Eine solche Erfassung wird im Sinne der Erfindung beispielsweise als im Wesentlichen gleichzeitig angesehen.

Die Polarisationseigenschaft wird dabei ortsaufgelöst, das heißt in Abhängigkeit von dem Ort auf der Oberfläche bzw. in der Schicht durchgeführt, wobei unter der Abhängigkeit von dem Ort in der Schicht eine Abhängigkeit von dem Ort parallel zu einer Fläche der Schicht verstanden wird. Das bedeutet, dass für verschiedene den Orten entsprechende Bereiche die Polarisationseigenschaft wenigstens näherungsweise getrennt erfasst wird. Die Größe dieser Bereiche richtet sich dabei nach dem Auflösungsvermögen der verwendeten Detektionseinrichtung und liegt vorzugsweise unterhalb von 4 mm$^2$.

Zur Erfassung der Polarisationseigenschaft weist die erfindungsgemäße Vorrichtung die Detektionseinrichtung gemäß Anspruch 1 auf. Diese kann insbesondere eine Erfassungsoptik zur Abbildung des untersuchten Oberflächenbereichs auf das Photodetektionselement und polarisierende optische Bauelemente umfassen.

Durch Vergleich der bekannten Polarisationseigenschaft der Beleuchtungsstrahlung und der erfassten Polarisationseigenschaft der Messstrahlung an der Oberfläche bzw. Schicht kann dann vorzugsweise auf eine Eigenschaft der Oberfläche bzw. Schicht zurück geschlossen werden. Durch die ortsaufgelöste, im Wesentlichen gleichzeitige Erfassung der Polarisationseigenschaft ist es daher mit der Erfindung möglich, Inhomogenitäten in Oberflächen oder Schichten mit nur einem Erfassungsschritt zu erkennen. Dabei können insbesondere auch Eigenschaften erfasst werden, die sich nicht unmittelbar im Absorptionsvermögen niederschlagen, sondern beispielsweise in der Drehung der Polarisationsebene. Die erfindungsgemäße Vorrichtung eignet sich daher insbesondere zur routinemäßigen Untersuchung von Oberflächen oder Schichten, besonders bevorzugt zur Materialuntersuchung.

Weiterbildungen und bevorzugte Ausführungsformen der Erfindung sind in den abhängigen Ansprüchen, der Beschreibung und den Zeichnungen beschrieben.

Grundsätzlich genügt es erfindungsgemäß, dass nur die Polarisationseigenschaft ortsaufgelöst ermittelt wird.

Es ist jedoch bevorzugt, dass zusätzlich in Abhängigkeit von dem Ort auf der Oberfläche bzw. in der Schicht die Intensität der Messstrahlung erfasst wird. Bei der erfindungsgemäßen Vorrichtung ist es dazu bevorzugt, dass die Detektionseinrichtung zur Erfassung der Intensität der Messstrahlung in Abhängigkeit von dem Ort auf der Oberfläche bzw. in der Schicht ausgebildet ist. Mit der Intensität der Messstrahlung ist dabei deren Intensität nahe der Oberfläche bzw. Schicht und insbesondere vor einer möglichen Filterung mit Polarisationsfiltern gemeint. Auf diese Weise kann nicht nur eine gegebenenfalls auftretende Drehung der Polarisationsebene durch die Oberfläche oder die Schicht erfasst werden, sondern es kann gleichzeitig auch untersucht werden, ob eine gegebenenfalls durch Anisotropien der Oberfläche oder der Schicht bedingte Absorption oder Reflexion von optischer Strahlung aufgetreten ist, die gegebenenfalls zu einer Drehung der Polarisationsebene geführt hat. Es ist so eine vollständigere Charakterisierung der Oberfläche bzw. der Schicht durch optische Eigenschaften möglich.

Erfindungsgemäß kann die Untersuchung grundsätzlich mit optischer Strahlung nur einer Wellenlänge durchgeführt werden. Insbesondere kann dazu im Messstrahlengang ein entsprechender Filter vorgesehen sein, der optische Strahlung aus der Umgebung, die nicht der Wellenlänge der optischen Beleuchtungsstrahlung entspricht, herausfiltert, um so die Präzision der Bestimmung der Polarisationseigenschaft zu erhöhen. Zur Untersuchung von Oberflächen oder Schichten mit spektral abhängigen Eigenschaften ist es jedoch bevorzugt, dass zusätzlich in Abhängigkeit von dem Ort auf der Oberfläche bzw. in der Schicht spektrale Eigenschaften der Messstrahlung erfasst werden. Bei der erfindungsgemäßen Vorrichtung ist es dazu bevorzugt, dass die Detektionseinrichtung zur spektral aufgelösten Erfassung der Messstrahlung in Abhängigkeit von dem Ort auf der Oberfläche bzw. in der Schicht ausgebildet ist. Die Quelle für die Beleuchtungsstrahlung ist dabei zur Abgabe polarisierter optischer Strahlung in dem gewünschten Wellenlängenbereich ausgebildet. Zur Untersuchung von Farben kann sie insbesondere zur Abgabe von weißem Licht ausgebildet sein.

Unter der Erfassung spektraler Eigenschaften der Messstrahlung bzw. der optischen Strahlung des Messstrahlenbündels wird dabei insbesondere auch eine spektral abhängige Erfassung der Polarisationseigenschaft bzw. der Intensität verstanden. Weiterhin braucht die spektrale Auflösung nicht sehr hoch zu sein. Beispielsweise kann eine Erfassung von Intensitäten in verschiedenen Wellenlängenbereichen durchgeführt werden, wie sie bei Farb-Videosensoren üblich ist. Auf diese Weise kann die Polarisationseigenschaft beispielsweise in Abhängigkeit sowohl von dem Ort als auch einer Wellenlänge bzw. eines Wellenlängenbereichs erfasst und vorzugsweise mit der der Beleuchtungsstrahlung verglichen werden, so dass, insbesondere bei gleichzeitiger ortsaufgelöster Erfassung der Intensität, eine sehr vollständige Charakterisierung der Oberfläche bzw. Schicht ermöglicht wird.

Zur spektral aufgelösten Erfassung der optischen Strahlung weist die Detektionseinrichtung ein Feld von Photodetektionselementen auf, wobei in dem Strahlengang der Messstrahlung, insbesondere eines Messstrahlenbündels, zwischen der Oberfläche bzw. Schicht und dem Photodetektionselementfeld ein Spektrometer angeordnet ist, bei dem es sich insbesondere um ein Beugungsgitter bzw. eine beugende Struktur handeln kann. Es sind jedoch auch refraktiv arbeitende optische Bauelemente denkbar.

Wegen der hohen räumlichen Auflösung und der einfachen Herstellung ist es jedoch besonders bevorzugt, dass die Detektionseinrichtung einen farbempfindlichen Sensor für optische Strahlung aufweist. Dabei kann es sich beispielsweise um grundsätzlich bekannte Anordnungen mit drei CCD-Sensoren, denen jeweils Anteile der Messstrahlung nach Strahlteilung und Filterung mit Farbfiltern zugeführt wird, handeln. Es sind jedoch auch so genannte Ein-Chip-Sensoren verwendbar, bei denen über benachbarten Photodetektionselementen bzw. Pixeln des Sensors jeweils Farbfilter unterschiedlicher Farbe angeordnet sind, so dass aus benachbarten Pixeln unterschiedlicher Farben sowohl eine Gesamtintensität der optischen Strahlung als Summe der Intensitäten für die einzelnen Farben als auch Farb- bzw. Spektralinformationen gewonnen werden können. Weiterhin können auch in Richtung der Messstrahlung hintereinander angeordnete, beispielsweise CMOS-Photodetektionselemente verwendet werden, zwischen denen in bekannter Weise Farbfilter angeordnet sind, und die so eine besonders hohe Ortsauflösung erlauben. Solche Anordnungen erlauben zwar nicht unbedingt eine sehr genaue spektrale Auflösung nach Wellenlängen, jedoch genügt es häufig, nur Informationen über bestimmte Wellenlängenbereiche bzw. Farbinformationen zu erhalten, wozu dann die Verwendung solcher farbempfindlichen Sensoren wegen der hohen Erfassungsgeschwindigkeit und der hohen örtlichen Auflösung bei gleichzeitig geringen Kosten sehr vorteilhaft sein kann.

Die erfasste Polarisationseigenschaft und gegebenenfalls die erfassten Intensitäten und/oder die spektralen Eigenschaften sollen mit entsprechenden vorgegebenen Soll-Eigenschaften bzw. -Werten für die Oberfläche bzw. Schicht verglichen werden. Es kann dann entsprechend dem Ergebnis des Vergleichs ein Signal gebildet und ausgegeben werden. Bei der erfindungsgemäßen Vorrichtung ist dazu eine Vergleichseinrichtung vorgesehen, in der für die Polarisationseigenschaft und gegebenenfalls die Intensitäten und gegebenenfalls die spektralen Eigenschaften entsprechende Soll-Eigenschaften bzw. -Werte für die Oberfläche bzw. Schicht speicherbar sind, und mittels derer die erfasste Polarisationseigenschaft und gegebenenfalls die erfassten Intensitäten und/oder die spektralen Eigenschaften mit den entsprechenden vorgegebenen Soll-Eigenschaften bzw. -Werten vergleichbar und dem Vergleichsergebnis entsprechende Signale bildbar sind. Es können dann Abweichungen der erfassten Eigenschaften der Messstrahlung von vorgegebenen Eigenschaften, die beispielsweise durch Untersuchung eines Gutmusters erhalten wurden oder anderweitig vorgegeben sind, erkannt werden. Die Abweichungen der erfassten Eigenschaften der Messstrahlung können beispielsweise auf entsprechende Abweichungen in den Materialeigenschaften der Oberfläche bzw. der Schicht oder der Topographie der Oberfläche bzw. der Schicht von denen des Gutmusters zurückzuführen sein. Abweichungen können bei dem Vergleich beispielsweise als kritisch eingestuft werden, wenn ein vorgegebener Schwellwert für den Betrag der Abweichung überschritten wird. Die das Vergleichsergebnis wiedergebenden Signale können dann an weiterverarbeitende Einrichtungen ausgegeben werden. Auf diese Weise wird eine automatische Untersuchung und insbesondere auch Qualitätskontrolle von Oberflächen bzw. Schichten ermöglicht. Die Vorrichtung ermöglicht insofern in dieser Weiterbildung auch eine Qualitätskontrolle von Oberflächen oder Schichten.

Zur Erfassung der Polarisationseigenschaft ist vorgesehen, dass die Messstrahlung mittels einer im Strahlengang der Messstrahlung angeordneten Anordnung von Polarisationsfiltern unter Bildung von zumindest in einem Bereich nahe der Polarisationsfilteranordnung der Anordnung der Polarisationsfilter entsprechend räumlich verschiedenen Strahlungsanteilen mit unterschiedlichen Polarisationszuständen gefiltert wird, dass Intensitäten der räumlich verschiedenen Strahlungsanteile in Abhängigkeit von dem Ort auf der Oberfläche bzw. in der Schicht erfasst werden, und dass in Abhängigkeit von den erfassten Intensitäten in Verbindung mit der Lage der Polarisationsfilter zueinander und zu der Oberfläche bzw. Schicht die Polarisationseigenschaft der Messstrahlung an der Oberfläche bzw. der Schicht ortsaufgelöst ermittelt wird. Bei der erfindungsgemäßen Vorrichtung umfasst die Detektionseinrichtung dazu ein Feld von Photodetektionselementen, eine im Strahlengang der Messstrahlung vor den Photodetektionselementen angeordnete Anordnung von Polarisationsfiltem, mittels derer die Messstrahlung unter Bildung von zumindest in einem Bereich nahe der Polarisationsfilteranordnung der Anordnung der Polarisationsfilter entsprechend räumlich verschiedenen Strahlungsanteilen mit unterschiedlichem Polarisationszustand filterbar ist, und eine Auswerteeinrichtung, mittels derer aus Signalen der Photodetektionselemente in Abhängigkeit von der Lage der Polarisationsfilter der Polarisationsfilteranordnung relativ zueinander, zu den Photodetektionselementen und der Oberfläche bzw. Schicht lokal aufgelöst die Polarisationseigenschaft der Messstrahlung für verschiedene Orte auf der Oberfläche bzw. in der Schicht ermittelbar ist. Bei den Photodetektionselementen kann es sich dabei grundsätzlich um beliebige Photodetektionselemente, beispielsweise Photodioden, Phototransistoren oder Photogates, handeln. Vorzugsweise werden jedoch CCD-Sensoren oder CMOS-Sensoren verwendet. Diese gestatten bei einfacher Herstellung eine besonders hohe räumliche Auflösung bei geringen Kosten. Zur Erzielung der räumlichen Auflösung wird also die Messstrahlung, vorzugsweise als Messstrahlenbündel, wenigstens teilweise durch die Polarisationsfilteranordnung geführt, wobei räumlich verschiedene Strahlungsanteile entstehen. Unter räumlich verschieden wird dabei verstanden, dass sich die Strahlungsanteile wenigstens unmittelbar hinter der Polarisationsfilteranordnung in unterschiedliche Raumbereiche ausbreiten bzw. dass die Strahlungsanteile sich im Bereich der Photodetektionselemente nicht wesentlich überlappen, so dass die Intensität der Strahlungsanteile räumlich aufgelöst erfassbar ist. Bei diesen Strahlungsanteilen kann es sich je nach Lage der Polarisationsfilteranordnung relativ zu dem Feld von Photodetektionselementen um Teilbündel eines Messstrahlenbündels oder, bei direkter Anordnung der Polarisationsfilter auf den Photodetektionselementen, auch nur um in die Photodetektionselemente eindringende Feldanteile handeln.

Unter einem Polarisationsfilter der Polarisationsfilteranordnung wird dabei ein optisches Element verstanden, das einfallende optische Strahlung in einer vorgegebenen Richtung linear oder zirkular polarisieren kann.

Um eine ortsaufgelöste Erfassung der Polarisationseigenschaft zu ermöglichen, sind dabei die Polarisationsfilteranordnung und das Feld von Photodetektionselementen so ausgebildet, dass einer der räumlich verschiedenen Strahlungsanteile jeweils durch wenigstens ein Photodetektionselement erfassbar ist. Die erzielbare räumliche Auflösung hängt dabei unter anderem von der Anzahl und Größe der Polarisationsfilter, der Anzahl und Größe der Photodetektionselemente und den Abbildungsverhältnissen, die festlegen, wie viele der Photodetektionselemente einen der räumlich verschiedenen Strahlungsanteile erfassen, ab.

Zur ortsaufgelösten Erfassung der Polarisationseigenschaft ist weiterhin die Relativlage der Polarisationsfilteranordnung und der Photodetektionselemente festgelegt, so dass abhängig von dem Strahlengang der Messstrahlung einem Photodetektionselement ein bestimmter Bereich der Anordnung von Polarisationsfiltern und damit ein bestimmter Polarisationszustand zugeordnet ist, der durch die polarisierenden Eigenschaften des entsprechenden Bereichs gegeben ist. In der Auswerteeinrichtung wird dann aus der bekannten Anordnung von Photodetektionselementen, der Zuordnung von Polarisationszuständen zu diesen und der sich aus der Abbildungsgeometrie ergebenden Zuordnung der Photodetektionselemente zu Orten auf der Oberfläche bzw. in der Schicht die Polarisationseigenschaft für verschiedene Orte auf der Oberfläche ermittelt. Die Auswerteeinrichtung kann hierzu entsprechende feste analoge und/oder digitalen Schaltungen umfassen, was eine schnelle Verarbeitung der Signale ermöglicht, oder einen mit einen entsprechend programmierten Mikroprozessor umfassen, der bei geringen Kosten auch einfach die Durchführung aufwändigerer Auswerteverfahren ermöglicht.

Auf diese Weise ist mit sehr geringem Aufwand eine ortsaufgelöste Erfassung der Polarisationseigenschaft möglich.

Dabei ist es bevorzugt, dass zur Ermittlung der Polarisationseigenschaft für einen vorgegebenen Ort auf der Oberfläche bzw. in der Schicht die Intensität eines entsprechenden räumlich verschiedenen Strahlungsanteils und die Intensität wenigstens eines räumlich verschiedenen Strahlungsanteils, der einem benachbarten Ort auf der Oberfläche bzw. in der Schicht entspricht und einen unterschiedlichen Polarisationszustand besitzt, verwendet werden. Bei der erfindungsgemäßen Vorrichtung ist es dazu bevorzugt, dass die Auswerteeinrichtung so ausgebildet ist, dass zur Ermittlung der Polarisationseigenschaft für einen vorgegebenen Ort auf der Oberfläche bzw. in der Schicht die Intensität eines entsprechenden räumlich verschiedenen Strahlungsanteils und die Intensität wenigstens eines räumlich verschiedenen Strahlungsanteils, der einem benachbarten Ort auf der Oberfläche bzw. in der Schicht entspricht und einen unterschiedlichen Polarisationszustand besitzt, verwendet werden.

Es kann also die Oberfläche bzw. Schicht in benachbarte Orte bzw. Bereiche aufgeteilt werden, die auf das Feld von Photodetektionselementen abgebildet werden. Bei der Filterung durch die Polarisationsfilteranordnung, die die Lage und Größe der Bereiche bestimmt, entstehen dann die räumlich verschiedenen Strahlungsanteile mit unterschiedlichen Polarisationszuständen, deren Intensitäten einzeln erfasst werden. Für einen gewählten Ort bzw. Bereich kann die Intensität des entsprechenden Strahlungsanteils mit einem entsprechenden Polarisationszustand ermittelt werden. Unter Verwendung der Intensitäten der Strahlungsanteile mit unterschiedlichen Polarisationszuständen, die benachbarten Orten bzw. Bereichen entsprechen und einen anderen Polarisationszustand aufweisen als der des erfassten Strahlungsanteils für den gewählten Ort, kann dann beispielsweise durch Interpolation für den gewählten Ort eine interpolierte Intensität eines dem Ort entsprechenden Anteils der Messstrahlung für den anderen Polarisationszustand näherungsweise ermittelt und dem Ort zugeordnet werden. Die interpolierte Intensität kann insbesondere der bei der Bildung des dem gewählten Ort entsprechenden Strahlungsanteils weggefilterten Anteils der Messstrahlung von dem Ort entsprechen. Dabei braucht grundsätzlich nur ein benachbarter Ort bzw. ein entsprechender Strahlungsanteil verwendet zu werden, es ist jedoch bevorzugt, mehrere zu verwenden, um durch entsprechende Interpolationsverfahren eine genauere Bestimmung zu ermöglichen. Aus der erfassten Intensität des Strahlungsanteils für den gewählten Ort und die interpolierte Intensität eines Messstrahlungsanteils anderer Intensität kann dann die Polarisationseigenschaft ermittelt werden. Solche Interpolationsverfahren sind beispielsweise im Zusammenhang mit einer Verbesserung der Bildeigenschaften bei digitalen Kameras bekannt.

Es ist daher besonders bevorzugt, dass zur Ermittlung der Polarisationseigenschaft für einen gewählten Ort an der Oberfläche bzw. Schicht die Intensität des dem Ort entsprechenden Strahlungsanteils mit einem entsprechenden ersten Polarisationszustand und eine durch Inter- oder Extrapolation aus der Intensität wenigstens eines dem gewählten Ort auf der Oberfläche bzw. in der Schicht benachbarten Orts entsprechenden räumlich verschiedenen Strahlungsanteils mit einem von dem ersten abweichenden zweiten Polarisationszustands gewonnene inter- bzw. extrapolierte Intensität verwendet werden. Die inter- bzw. extrapolierte Intensität entspricht der Intensität des von dem gewählten Ort ausgehenden Anteils der Messstrahlung mit dem zweiten Polarisationszustand. Bei der Vorrichtung ist es dementsprechend bevorzugt, dass die Auswerteeinrichtung eine Inter- bzw. Extrapolationseinrichtung aufweist, die so ausgebildet ist, dass zur Ermittlung der Polarisationseigenschaft für einen gewählten Ort der Oberfläche bzw. Schicht die Intensität des dem Ort entsprechenden Strahlungsanteils mit einem entsprechenden ersten Polarisationszustand und eine durch Inter- oder Extrapolation aus der Intensität wenigstens eines dem gewählten Ort auf der Oberfläche bzw. in der Schicht benachbarten Orts entsprechenden räumlich verschiedenen Strahlungsanteils mit einem von dem ersten abweichenden zweiten Polarisationszustands gewonnene inter- bzw. extrapolierte Intensität verwendet werden. Der Ort kann dabei, wie zuvor erwähnt, durch einen kleinen Bereich um einen Aufpunkt gegeben sein.

Diese Weiterbildung erlaubt es insbesondere, genau die Lage der Polarisationsebene der Messstrahlung zu ermitteln, wenn die räumlich verschiedenen Strahlungsanteile in zwei Richtungen linear polarisiert sind, die einen bekannten Winkel einschließen.

Um eine besonders hohe räumliche Auflösung zu erreichen sind die Polarisationsfilter in einer Fläche quer zu der mittleren Ausbreitungsrichtung der Messstrahlung und unmittelbar auf dem Feld der Photodetektionselemente angeordnet. Wird die Beleuchtungsstrahlung als Messstrahlenbündel von der Oberfläche oder Schicht zurückgeworfen bzw. abgegeben, kann die Fläche quer zu dem Messstrahlenbündel ausgerichtet sein. Auf diese Weise wird weitgehend vermieden, dass ein von einem Bereich bzw. Ort auf der Oberfläche oder in der Schicht ausgehendes Strahlenbündel der Messstrahlung durch mehrere Bereiche der Polarisationsfilteranordnung geführt wird, in denen das Strahlenbündel in unterschiedlichen Polarisationsrichtungen gefiltert wird, was dazu führen kann, dass ein Photodetektionselement einen Strahlungsanteil mit undefiniertem Polarisationszustand empfängt.

Weiterhin ist es bevorzugt, dass zur Ermittlung von Werten der Intensität der Messstrahlung für verschiedene Orte auf der Oberfläche bzw. in der Schicht Summen von Intensitäten von räumlich verschiedenen Strahlungsanteilen, die benachbarten Orten auf der Oberfläche bzw. in der Schicht entsprechen und einen unterschiedlichen Polarisationszustand besitzen, verwendet werden. Dazu ist es bei der erfindungsgemäßen Vorrichtung bevorzugt, dass die Auswerteeinrichtung eine Summationseinrichtung zur Summation von Intensitäten aufweist, die von Photodetektionselementen erfasst sind, mittels derer räumlich verschiedene Strahlungsanteile empfangbar sind, die benachbarten Orten auf der Oberfläche bzw. in der Schicht entsprechen und einen unterschiedlichen Polarisationszustand besitzen. Auf diese Weise ist es sehr einfach, nicht nur Intensitäten von unterschiedlich polarisierten gefilterten Strahlungsanteilen und daraus eine Polarisationseigenschaft zu bestimmen, sondern es ist auch, ähnlich einer Mittelwertbildung, möglich, einem von einem Bereich bzw. Ort auf der Oberfläche bzw. in der Schicht abgegebenen Anteil der Messstrahlung unter Beachtung der Polarisationsrichtungen der räumlich unterschiedlichen Strahlungsanteile eine Intensität an der Oberfläche bzw. Schicht zuzuordnen.

Wie zur Ermittlung der Polarisationseigenschaft ist es zur ortsaufgelösten Ermittlung genauerer Werte für die Intensität der Messstrahlung an der Oberfläche bzw. Schicht weiterhin bevorzugt, dass die Intensität der Messstrahlung für einen gewählten Ort unter Verwendung der Intensität des dem Ort entsprechenden Strahlungsanteils einer entsprechenden Polarisationsrichtung und wenigstens einer inter- bzw. extrapolierten Intensität eines von dem gewählten Ort ausgehenden Anteils der Messstrahlung mit einem von dem ersten Polarisationszustand abweichenden anderen Polarisationszustand, die durch Inter- oder Extrapolation von Intensitäten von dem gewählten Ort benachbarten Orten entsprechenden, räumlich verschiedenen Strahlungsanteilen mit dem anderen Polarisationszustand erhalten wird, ermittelt wird. Die Vorrichtung weist hierzu vorzugsweise eine entsprechend ausgebildete Auswerteeinrichtung auf. Wie zuvor entspricht dabei, bedingt durch das endliche Auflösungsvermögen der Vorrichtung, einem Ort ein kleiner Bereich auf der Oberfläche bzw. Schicht.

Grundsätzlich können bei der Polarisationsfilteranordnung Polarisationsfilter mit gleicher Polarisationsrichtung so zueinander angeordnet sein, dass zwischen diesen Bereiche entstehen, in denen auf die Anordnung auftreffende optische Strahlung nicht in Bezug auf den Polarisationszustand gefiltert wird. Auf diese Weise können räumlich verschiedene Strahlungsanteile gebildet werden, die entweder einen Polarisationszustand aufweisen, wie er durch die Polarisationsfilter definiert ist, oder den an der Oberfläche bzw. der Schicht vorhandenen Polarisationszustand der Messstrahlung. Ist beispielsweise bekannt, dass die Oberfläche bzw. die Schicht allenfalls zu einer Drehung der Polarisationsebene von linear polarisierter optischer Strahlung führt, kann eine solche Polarisationsfilteranordnung zur Bestimmung der Polarisationseigenschaften und Intensitäten in Abhängigkeit vom Ort genügen.

Es ist jedoch bevorzugt, dass bei Filterung der Messstrahlung räumlich verschiedene Strahlungsanteile mit zwei verschiedenen, durch die Polarisationsfilteranordnung bestimmten Polarisationsrichtungen gebildet werden. Dazu ist es bei der erfindungsgemäßen Vorrichtung bevorzugt, dass die Polarisationsfilter auf einer Fläche angeordnet sind, wobei zu wenigstens einem Polarisationsfilter mit einer ersten Polarisationsrichtung jeweils wenigstens ein Polarisationsfilter mit einer von der ersten Polarisationsrichtung abweichenden zweiten Polarisationsrichtung benachbart ist. Unter benachbart wird dabei verstanden, dass zur Erfassung der Polarisationseigenschaft verwendete Photodetektionselemente jeweils nur Strahlungsanteile empfangen, die durch nur einen der Polarisationsfilter getreten sind, so dass sich je nach Anordnung der Polarisationsfilter und den anderen optischen Eigenschaften der Detektionseinrichtung die Polarisationsfilter dabei nicht unbedingt entlang ihrer Ränder zu berühren brauchen. Auf diese Weise ist es möglich, unabhängig von der Kenntnis des Polarisationszustandes des Beleuchtungsstrahlenbündels und der Eigenschaften der Oberfläche und der Schicht die Lage der Polarisationsebene des Messstrahlenbündels an der Oberfläche bzw. der Schicht ortsaufgelöst ohne weitere Annahmen zu bestimmen.

Dabei ist es besonders bevorzugt, dass die Polarisationsfilteranordnung Polarisationsfilter mit zueinander orthogonalen Polarisationsrichtungen aufweist. Die Verwendung einer solchen Polarisationsfilteranordnung in der erfindungsgemäßen Vorrichtung erlaubt eine besonders einfache Bestimmung des Polarisationsgrades, der Polarisationsebene und auch der Intensität der Messstrahlung an der Oberfläche bzw. Schicht in Abhängigkeit vom Ort, da die entsprechenden Strahlungsanteile voneinander linear unabhängig sind. Insbesondere kann der Polarisationsgrad unter Verwendung von Differenzen der Intensitäten räumlich verschiedener Strahlungsanteile ermittelt werden, die benachbarten Orten auf der Oberfläche bzw. in der Schicht entsprechen. Ebenso kann die Intensität der Messstrahlung in Abhängigkeit vom Ort durch Summation der entsprechenden Intensitäten der räumlich verschiedenen Strahlungsanteile erhalten werden.

Polarisationsfilter können eine sehr hohe Filterqualität aufweisen, so dass transmittiertes Licht einen Polarisationsgrad von über 99 % aufweist. Dies ist grundsätzlich wünschenswert. Eine Empfangseinrichtung zur Erfassung der transmittierten optischen Strahlung, die Ausgangssignale eines Photodetektionselements mittels einer mit diesem verbundenen digitalen Messsignalverarbeitung digitalisiert, kann jedoch einen im Vergleich dazu kleinen Dynamikbereich, zum Beispiel von 128 Stufen, aufweisen. Bei orthogonaler Anordnung der Polarisationsrichtungen können, wenn die Polarisationsebene der zurückgeworfenen Strahlung einen nur sehr kleinen Winkel mit einer der Polarisationsrichtungen aufweist, die dann nur kleinen Beiträge in der anderen Polarisationsrichtung nicht mehr aufgelöst werden. Es ist dann bevorzugt, dass die Polarisationsfilteranordnung Polarisationsfilter mit zueinander geneigten, nicht orthogonalen Polarisationsrichtungen aufweist. Besonders bevorzugt weist die Polarisationsfilteranordnung für wenigstens einen Polarisationsfilter mit einer ersten Polarisationsrichtung wenigstens zwei weitere zu diesem benachbarte Polarisationsfilter mit voneinander abweichenden Polarisationsrichtungen auf, deren Polarisationsrichtungen mit der ersten Polarisationsrichtung einen von 90° abweichenden Winkel einschließen. Die Beträge der Winkel sind dabei größer als 0°. Vorzugsweise sind die Winkel gleich groß. Insbesondere können die Polarisationsfilter streifenförmig nebeneinander angeordnet sein, wobei die Polarisationsrichtungen aufeinander folgender benachbarter Streifen in der gleichen Drehrichtung, vorzugsweise um etwa 120°, gegeneinander gedreht sind. Selbst wenn die Polarisationsebene einfallender optischer Strahlung nur einen sehr kleinen Winkel mit einer der Polarisationsrichtungen der Polarisationsfilter einschließt, lassen die anderen Polarisationsfilter noch relativ große Intensitäten durch, die auch bei einem kleinen Dynamikbereich einer Empfangseinrichtung gut detektiert werden können.

Um eine Zuordnung von Polarisationszuständen bzw. Polarisationsfiltern zu Photodetektionselementen zu erleichtern und eine gleichmäßige Ortsauflösung im gesamten Erfassungsbereich auf der Oberfläche bzw. in der Schicht zu gewährleisten, ist es bevorzugt, dass die Polarisationsfilter regelmäßig angeordnet sind. Insbesondere können die Polarisationsfilter streifen-, schachbrett- oder wabenartig angeordnet sein. Es sind jedoch auch Muster mit beispielsweise Achtecksymmetrie denkbar. So können bei streifenförmigen Mustern streifenförmige Polarisationsfilter mit unterschiedlichen Polarisationsrichtungen alternierend parallel zueinander angeordnet sein. Dadurch kann bei einer entsprechenden matrixartigen Anordnung der Photodetektionselemente eine Justierung in einer Richtung parallel zu den Längsrichtungen der Streifen entfallen. Es ist jedoch auch möglich, streifenförmige Polarisationsfilter beabstandet voneinander parallel anzuordnen, so dass zwischen diesen nicht filternde Bereiche entstehen, die die ungefilterte Transmission entsprechender räumlich verschiedener Strahlungsanteile erlauben.

Bei einer schachbrettartigen Anordnung können beispielsweise rechteckige oder insbesondere quadratische Polarisationsfilter die jeweils eine von zwei, vorzugsweise orthogonal zueinander ausgerichteten, Polarisationsrichtungen aufweisen, alternierend zueinander angeordnet sein. Bei wabenförmigen Mustern, die insbesondere hexagonale Symmetrie aufweisen können, können insbesondere auch Polarisationsfilter mit jeweils einer von drei verschiedenen Polarisationsrichtungen verwendet werden, die so angeordnet sind, dass ein Polarisationsfilter einer ersten Polarisationsrichtung von sechs Polarisationsfiltern mit jeweils alternierender zweiter und dritter Polarisationsrichtung umgeben ist. Eine schachbrettartige oder auch wabenartige Anordnung erlaubt eine bessere räumliche Auflösung bzw. günstigere Interpolationsmöglichkeiten bei der Bestimmung der Polarisationseigenschaft bzw. der Intensität der Messstrahlung, wobei jedoch bei dem zuletzt genannten Wabenmuster ein erhöhter Verarbeitungsaufwand auftritt, da die Polarisationsrichtungen der Polarisationsfilter nicht orthogonal zueinander liegen.

Es ist bevorzugt, dass die Polarisationsfilteranordnung diffraktiv polarisierende Elemente umfasst. Bei solchen Elementen wird ausgenutzt, dass die Beugung an nicht rotationssymmetrischen Strukturen aus einem leitenden Material einen polarisierenden Effekt hat. Entsprechende Strukturen können insbesondere bei sehr kleiner Ausdehnung der Polarisationsfilter im Vergleich zu den zuvor genannten Möglichkeiten sehr einfach hergestellt werden.

Erfindungsgemäß umfasst wenigstens einer der Polarisationsfilter eine für wenigstens eine Wellenlänge im Bereich der durch die Photodetektionselemente erfassbaren optischen Strahlung oder der Beleuchtungsstrahlung polarisierend wirkende Struktur aus Metall. Ein solcher Polarisationsfilter ist sehr einfach herstellbar, wobei insbesondere auch feine Strukturen mit bekannten Strukturierungsverfahren, wie sie aus der Mikroelektronik oder der Mikromechanik bekannt sind, herstellbar sind.

Dabei ist es besonders bevorzugt, dass die Größe von Öffnungen zwischen oder in Elementen der Struktur kleiner als etwa das Doppelte einer Wellenlänge, vorzugsweise kleiner als eine Wellenlänge, im Bereich der durch die Photodetektionselemente erfassbaren optischen Strahlung oder der Beleuchtungsstrahlung ist. Solche Strukturen leitender Metalle, wirken nicht mehr im einfachen Sinne beugend, sondern es können auch Effekte auftreten, wie sie von Wellenleitern bekannt sind. So können sich teilweise Resonanzeffekte ergeben, da die leitenden Teile der Struktur mit den elektrischen Feldern der optischen Strahlung wechselwirken und im Bereich der Wellenlänge der Strahlung voneinander beabstandet sind. Insbesondere bei Strukturabständen kleiner als eine Wellenlänge tritt im Wesentlichen nur ein Strahlungsanteil durch die Filteranordnung hindurch, der bei einer Betrachtung im Rahmen einer Beugungstheorie als nullte Beugungsordnung angesehen werden kann. Parallel zu Strukturelementen polarisierte Feldanteile der Messstrahlung führen dabei zu entsprechenden Strömen in den leitenden Bereichen, die zu einer Absorption und/ oder Reflexion dieser Strahlungsanteile führen, die so bei der Transmission wesentlich geschwächt werden oder gar nicht den Polarisationsfilter durchdringen können. Orthogonal zu der Richtung der Strukturelemente polarisierte optische Strahlung dagegen kann die Struktur mit nur geringer Schwächung oder gar ungeschwächt passieren. Besonders bevorzugt sind die Strukturen wesentlich kleiner als die Wellenlänge der verwendeten Strahlung, da sich so eine nur geringe spektrale Abhängigkeit des Transmissionsgrades ergibt. Diese Strukturen können auch in Reflexion verwendet werden.

Um linear polarisierte Strahlung zu erhalten und gleichzeitig eine einfache Herstellung zu ermöglichen, ist es bevorzugt, dass die Struktur parallele Streifen umfasst. Die dadurch entstehende Polarisationsrichtung verläuft dabei dann, wie oben ausgeführt, orthogonal zu der Richtung der als Streifen ausgebildeten Strukturelemente aus dem leitenden Material, insbesondere Metall.

Grundsätzlich können die Strukturen auf einen geeigneten Träger aufgebracht sein, so dass die Anordnung der Polarisationsfilter als Bauteil separat handhabbar ist. Es wäre dann jedoch notwendig, dieses Bauelement und das Feld von Photodetektionselementen relativ zueinander zu justie-ren. Erfindungsgemäß sind daher die polarisierend wirkenden Strukturen auf eine Oberfläche der Photodetektionselemente unmittelbar aufgebracht. Auf diese Weise werden gleichzeitig mehrere Vorteile erreicht. Zum einen liegen die Polarisationsfilter dabei im Bild der Oberfläche, so dass, wie oben ausgeführt, eine sehr gute räumliche Auflösung im Hinblick auf die Abbildungsgeometrie erreicht wird. Zum anderen kann eine Dejustierung zwischen der Polarisationsfilteranordnung und dem Feld von Photodetektionselementen nicht stattfinden, so dass eine solche Vorrichtung sehr robust ist. Schließlich sind die entsprechenden Strukturen auf der Oberfläche der Photodetektionselemente einfach mit üblichen Metallisierungs- und/oder Strukturierungsverfahren, die ohnehin zur Herstellung von Feldern von Photodetektionselementen, wie zum Beispiel CCD-Sensoren oder CMOS-Sensoren, verwendet werden, mit der erforderlichen Präzision und räumlichen Feinheit herstellbar.

Eine erfindungsgemäße Vorrichtung mit einem Feld von Photodetektionselementen und auf einer Oberfläche der Photodetektionselemente unmittelbar aufgebrachten Polarisatorbereichen, die jeweils eine Struktur aus Metall aufweisen, und die als Polarisationsfilter für optische Strahlung wenigstens einer Wellenlänge im Bereich der Wellenlängen der durch die Photodetektionselemente erfassbaren optischen Strahlung wirken, kann insbesondere auch als Sensor für optische Strahlung dienen. Für einen solchen Sensor gelten insbesondere die Vorteile und Erläuterungen zu der im vorhergehenden Absatz geschilderten Ausführungsform der Vorrichtung.

Die Photodetektionselemente können dabei an ihrer Oberfläche wenigstens eine, insbesondere isolierende Schicht oder eine Schicht mit Mikrolinsen, die Strahlung auf die Photodetektionselemente fokussieren, aufweisen, auf die die polarisierend wirkenden Strukturen aufgebracht werden.

Zur Herstellung eines solchen Sensors werden ein Feld von Photodetektionselementen gebildet und danach wird auf die so gebildete Oberfläche eine für eine vorgegebene Wellenlänge von optischer Strahlung polarisierend wirkende Struktur aus einem Metall, aufgebracht. Bevorzugt werden hierzu lithographische Verfahren der Mikroelektronik oder Mikromechanik verwendet.

Dabei ist es auch bei dem Sensor bevorzugt, dass zu jedem Polarisatorbereich mit einer ersten Polarisationsrichtung wenigstens ein Polarisatorbereich benachbart ist, der eine von der ersten Polarisationsrichtung abweichende zweite Polarisationsrichtung aufweist. Besonders bevorzugt sind die beiden Polarisationsrichtungen dabei, wie oben ausgeführt, orthogonal zueinander ausgerichtet. Je nach Verwendung sind allerdings auch die oben genannten anderen Polarisationsfilteranordnungen, insbesondere solche, für wenigstens einen Polarisationsfilter mit einer ersten Polarisationsrichtung wenigstens zwei weitere zu diesem benachbarte Polarisationsfilter mit voneinander abweichenden Polarisationsrichtungen aufweist, deren Polarisationsrichtungen mit der ersten Polarisationsrichtung einen von 90° abweichenden Winkel einschließen, bevorzugt. Diese können insbesondere in Streifen mit gleicher Polarisationsrichtung angeordnet sein.

Um auch Farbinformationen ortsaufgelöst erfassen zu können, ist es bei der Vorrichtung wie auch dem Sensor bevorzugt, dass das Feld von Photodetektionselementen zur wenigstens zweikanaligen Detektion von optischer Strahlung ausgebildet ist, wobei jeder Kanal einem von wenigstens zwei sich höchstens teilweise überlappenden Wellenlängenbereichen entspricht. Vorzugsweise wird ein Feld von Photodetektionselementen zur dreikanaligen Detektion von optischer Strahlung verwendet, da diese eine für den Menschen angepasste Erfassung von spektralen Informationen erlaubt. Dabei ist es besonders bevorzugt, dass ein einzelner Polarisationsfilter bzw. Polarisatorbereich sich über alle Photodetektionselemente erstreckt, die bei dem Sensor verschiedenen Farben, aber den gleichen Orten zugeordnet sind. Werden bei dem Feld von Photodetektionselementen dazu Farbfilter verwendet, können diese oberhalb oder unterhalb der polarisierenden Struktur angeordnet sein.

Um auch zirkular polarisiertes Licht erfassen zu können, ist es bevorzugt, dass im Messstrahlengang zwischen der Oberfläche und der Polarisationsfilteranordnung eine für eine zur Untersuchung verwendete Wellenlänge ausgelegte Viertelwellenplatte angeordnet ist.

Um eine besonders kompakte Ausbildung der Vorrichtung zu ermöglichen, ist es bevorzugt, dass der Beleuchtungs- und der Messstrahlengang in wenigstens einem Abschnitt koaxial verlaufen. Insbesondere kann hierzu im Beleuchtungs- und Messstrahlengang ein halbdurchlässiger Reflektor angeordnet sein, der am Ende des Abschnitts angeordnet ist und die Beleuchtungs- oder das Messstrahlung in bzw. aus dem gemeinsamen Strahlengang ein- bzw. auskoppelt.

Die Erfindung wird nun weiter beispielhaft anhand der Zeichnungen erläutert. Es zeigen:

Fig. 1    eine schematische Darstellung einer erfindungsgemäßen Vorrichtung zur Untersuchung einer Oberfläche nach einer ersten bevorzugten Ausführungsform der Erfindung,

Fig. 2    eine schematische Darstellung einer Polarisationsfilteran- ordnung der Vorrichtung in Fig. 1,

Fig. 3    eine schematische Darstellung eines Ausschnitts aus einer Polarisationsfilteranordnung einer Vorrichtung zur Unter- suchung einer Oberfläche oder einer Schicht nach einer zweiten bevorzugten Ausführungsform der Erfindung,

Fig. 4A und B    eine teilweise schematische Draufsicht und Schnittansicht durch einen Sensor für eine Vorrichtung nach einer dritten bevorzugten Ausführungsform der Erfindung,

Fig. 5    eine schematische Darstellung eines Ausschnitts aus einer Polarisationsfilteranordnung einer Vorrichtung zur Unter- suchung einer Oberfläche oder Schicht nach einer vierten bevorzugten Ausführungsform der Erfindung, und

Fig. 6 eine schematische Darstellung eines Ausschnitts aus einer Polarisationsfilteranordnung einer Vorrichtung zur Unter- suchung einer Oberfläche oder Schicht nach einer fünften bevorzugten Ausführungsform der Erfindung.

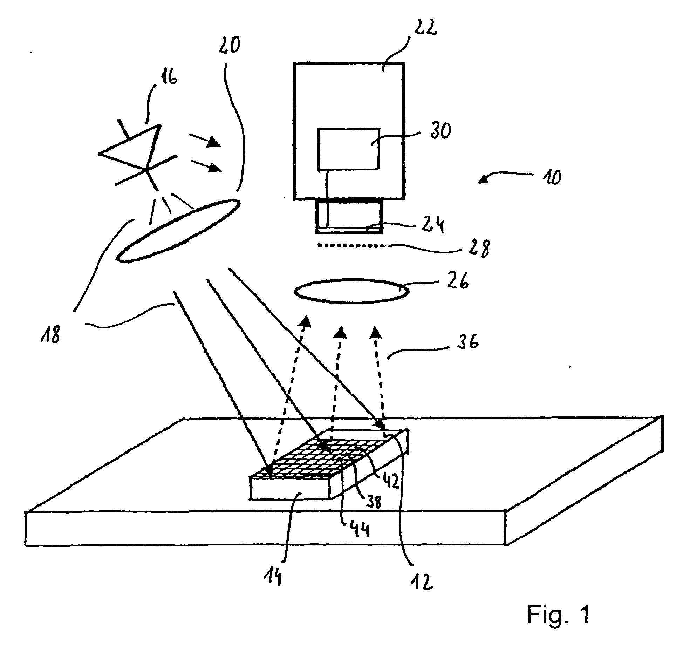

In Fig. 1 umfasst eine Vorrichtung 10 zur Untersuchung einer Oberfläche 12 eines Gegenstands 14, beispielsweise eines Werkstücks, eine Quelle 16 für polarisierte optische Strahlung, die als Beleuchtungsstrahlung ein Beleuchtungsstrahlenbündel 18 abgibt, eine Beleuchtungsoptik 20 zur Fokussierung des Beleuchtungsstrahlenbündels 18 auf die Oberfläche 12 und eine Detektionseinrichtung. Diese umfasst eine in einer geeigneten Lage relativ zu der Beleuchtungsoptik 20 und der Oberfläche 16 angeordnete Kamera 22 mit einem Feld 24 von Photodetektionselementen in Form eines CCD-Sensors zur Erfassung eines Bildes der Oberfläche 12, eine Erfassungsoptik 26 zur Abbildung der Oberfläche 12 auf das Feld 24 von Photodetektionselementen, sowie, in Fig. 1 nur schematisch gezeigt, eine im Strahlengang zwischen der Erfassungsoptik 26 und dem Feld 24 von Photodetektionselementen angeordnete Anordnung 28 von Polarisationsfiltern.

Als Quelle 16 für polarisierte optische Strahlung wird im Beispiel ein Laser verwendet, der im Wesentlichen monochromatisches Licht mit linearer Polarisation abgibt.

Die Beleuchtungsoptik 20 ist in Fig. 1 nur sehr schematisch dargestellt und kann insbesondere auch mehrere Linsen oder wenigstens eine Blende aufweisen.

Die Erfassungsoptik 26 ist in Fig. 1 ebenfalls nur stark schematisch als Linse dargestellt, kann aber ebenso wie die Beleuchtungsoptik 20 mehrere Linsen und gegebenenfalls eine oder mehrere Blenden umfassen.

Die Anordnung 24 von Photodetektionselementen, im Beispiel ein CCD-Sensor mit einer matrixförmigen Anordnung von entsprechenden Photodetektionselementen, ist zur Erfassung der von der Oberfläche 12 als Messstrahlung bzw. Messstrahlenbündel 36 zurückgeworfenen optischen Strahlung des Beleuchtungsstrahlenbündels 18 in Abhängigkeit von dem Ort auf der Oberfläche 12 ausgebildet.

Die Vorrichtung 10 umfasst weiterhin eine in der Kamera 22 angeordnete Auswerteeinrichtung 30. Die Auswerteeinrichtung 30 ist mit dem Feld 24 von Photodetektionselementen verbunden, um Signale von den Photodetektionselementen mit einer vorgegebenen Erfassungsfrequenz auszulesen und entsprechende Intensitätsbilder weiterzuverarbeiten und gegebenenfalls zu speichern.

Die Polarisationsfilteranordnung 28 ist, in Fig. 1 nur der Übersichtlichkeit halber anders gezeigt, unmittelbar im Strahlengang zwischen der Erfassungsoptik 26 und dem Feld 24 von Photodetektionselementen unmittelbar vor dem Feld 24 angeordnet und relativ zu diesem ausgerichtet.

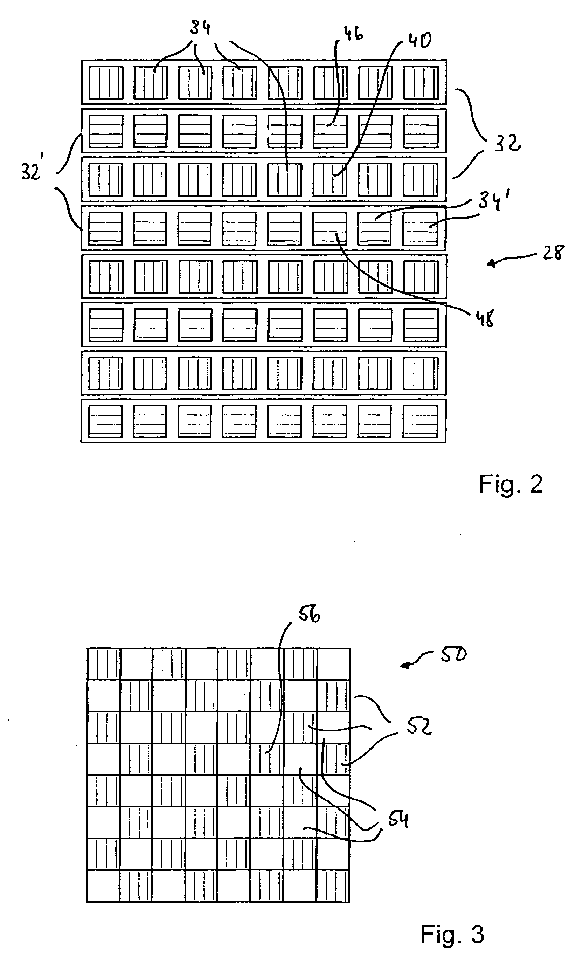

Ein Ausschnitt aus der Polarisationsfilteranordnung ist in Fig. 2 schematisch genauer gezeigt. Die Anordnung weist in Polarisationsfilterstreifen 32 und 32' angeordnete Polarisationsfilter 34 bzw. 34' auf, wobei die Polarisationsfilter 34 bzw. 34' der Polarisationsfilterstreifen 32 bzw. 32' jeweils gleiche Polarisationsrichtung aufweisen. Die Polarisationsrichtungen der Polarisationsfilter 34 und 34' sind dabei, in Fig. 2 durch eine entsprechende Schraffierung angedeutet, zueinander orthogonal ausgerichtet.

Die Polarisationsfilter 34 bzw. 34' sind insgesamt matrixförmig angeordnet und entsprechen in ihrer Ausdehnung und Anordnung der Ausdehnung und Anordnung der Photodetektionselemente des Feldes 24 von Photodetektionselementen. Im Beispiel weisen die Photodetektionselemente eine Fläche von etwa $16 \mu m^2$ auf.

Im vorliegenden Beispiel sind die Polarisationsfilter 34 und 34' durch Strukturen mit jeweils parallel zueinander verlaufenden Streifen aus einem Metall gegeben, deren Abstand kleiner als die Wellenlänge der optischen Strahlung des Beleuchtungsstrahlenbündels 18, im Beispiel etwa 80 % der Wellenlänge des Beleuchtungsstrahlenbündels 18, ist. Die Streifen der Polarisationsfilter 34 bzw. 34' sind im Wesentlichen senkrecht zueinander orientiert. Die Polarisationsrichtung der Filter 34 bzw. 34' verläuft daher jeweils im Wesentlichen orthogonal zu der Richtung der metallischen Streifen der entsprechenden Strukturen.

Obwohl in Fig. 2 die Polarisationsfilter 34 bzw. 34' als quadratische Felder gezeichnet sind, ist es bei einer alternativen Ausführungsform auch möglich, dass die Polarisationsfilterstreifen 32 und 32' jeweils eine über den jeweiligen Polarisationsfilterstreifen homogene Strukturierung aufweisen, so dass eine Justierung zwischen der Polarisationsfilteranordnung 28 und dem Feld 24 von Photodetektionselementen in nur einer Richtung erforderlich ist.

Die metallische Struktur ist dabei durch lithografische Verfahren auf ein Substrat aufgebracht.

Die Polarisationsfilteranordnung 28 ist in einer festen Lage vor dem Feld 24 von Photodetektionselementen so angeordnet, dass jeweils einer der Polarisationsfilter 34 bzw. 34' über bzw. vor einem entsprechenden Photodetektionselement des Feldes 24 angeordnet ist. Die Polarisationsfilter 34 und 34' entsprechen daher sowohl in Form als auch Lage im Wesentlichen der Form und Lage der Photodetektionselemente des Feldes 24.

Zur Untersuchung der Oberfläche 12 wird linear polarisiertes Licht von der Quelle 16 in Form eines Beleuchtungsstrahlenbündels 18 durch die Beleuchtungsoptik 20 auf die Oberfläche 12 gestrahlt, wobei diese je nach Gegenstand 14 beispielsweise unter Drehung der Polarisationsebene und teilweiser Absorption als Messstrahlenbündel 36 reflektiert oder zurückgestreut wird. Das Messstrahlenbündel 36 wird dann durch die Erfassungsoptik 26 auf das Feld 24 von Photodetektionselementen abgebildet, wobei es durch die Polarisationsfilteranordnung 28 in Bezug auf die Polarisation gefiltert wird.

Bei der Filterung entstehen aus dem Messstrahlenbündel 36 durch die Filterung räumlich verschiedene Strahlungsanteile, im Beispiel Teilbündel, die jeweils hinter den Polarisationsfiltern 34 bzw. 34' räumlich im Wesentlichen voneinander getrennt verlaufen bzw. sich ausbreiten und ebenso auf die Photodetektionselemente im Wesentlichen räumlich getrennt auftreffen.

Jedes Photodetektionselement empfängt ein Strahlenbündel eines entsprechenden Bereichs bzw. Orts auf der Oberfläche 12 des Gegenstands 14. Diese im Beispiel gleich großen Bereiche bzw. Orte bilden dabei entsprechend der Abbildungsgeometrie der Erfassungsoptik 26 auf der Oberfläche entsprechend der Anordnung der Photodetektionselemente eine matrixartige Anordnung. Solche Bereiche sind Fig. 1 stark schematisch und nicht größengerecht ausschnittsweise durch Quadrate gekennzeichnet.

Ein von einem solchen Bereich bzw. Ort auf der Oberfläche 16 ausgehendes Strahlenbündel wird auf ein entsprechendes Photodetektionselement abgebildet, wobei es einen der Polarisationsfilter 34 bzw. 34' passiert und danach einen entsprechenden Polarisationszustand aufweist. Bedingt durch die Anordnung der Polarisationsfilter 34 und 34' gibt es zu jedem Ort bzw. Bereich auf der Oberfläche 16 wenigstens zwei benachbarte Orte bzw. Bereiche, die ebenfalls auf das Feld 24, jedoch auf benachbarte Photodetektionselemente abgebildet werden, wobei die entsprechenden durch Filterung entstehenden Teilbündel einen anderen Polarisationszustand aufweisen.

Beispielsweise wird also das von dem Ort bzw. Bereich 38 auf der Oberfläche 16 ausgehende Strahlenbündel durch den Polarisationsfilter 40 auf das dahinter liegende Photodetektionselement abgebildet, wobei das entsprechende Teilbündel in einer ersten Polarisationsrichtung orthogonal zu den Längsrichtungen der Polarisationsfilterstreifen 32 und 32' polarisiert ist. Von den zu dem Ort 38 benachbarten Orten bzw. Bereichen 42 und 44 werden jeweils Strahlenbündel von der Erfassungsoptik 26 durch die entsprechenden Polarisationsfilter 46 und 48 hindurch auf die jeweils dahinter liegenden Photodetektionselemente abgebildet, wobei die entsprechenden Teilbündel nun aber eine zweite Polarisationsrichtung und damit einen Polarisationszustand aufweisen, bei dem die Polarisationsrichtung im Wesentlichen parallel zu der Längsrichtung der Polarisationsfilterstreifen 32 und 32' polarisiert ist. In einer anderen Raumrichtung zu dem Ort 38 benachbarte Orte werden jeweils durch innerhalb des Polarisationsfilterstreifens 32 angeordnete benachbarte Polarisationsfilter 34 auf die entsprechenden Photodetektionselemente abgebildet.

Auf dem Feld 24 von Photodetektionselementen werden also Intensitäten von Teilbündeln erfasst, die verschiedenen Orten auf der Oberfläche 16 entsprechen und die wenigstens teilweise, im Beispiel spaltenweise, unterschiedliche Polarisationszustände aufweisen.

Zur Ermittlung der Intensität der Messstrahlung am Ort bzw. im Bereich 38 werden nun in der Auswerteeinrichtung 30 die erfassten Intensitäten der räumlich verschiedenen Strahlungsanteile bzw. Teilbündel, die durch Filterung der von den Bereichen 38, 42 und 44 ausgehenden Strahlenbündel erhalten wurden, gemittelt. Dazu wird zu der dem Ort 38 entsprechenden Intensität des gefilterten Strahlungsanteils mit der ersten Polarisationsrichtung die Hälfte der Summe der Intensitäten der den dem Ort 38 benachbarten Bereichen bzw. Orten 42 und 44 entsprechenden, durch die Polarisationsfilter 46 und 48 gebildeten Strahlungsanteile mit der zweiten Polarisationsrichtung addiert. Diese einfache Ermittlung wird dadurch ermöglicht, dass die Polarisationsrichtungen der Polarisationsfilter 34 und 34' zueinander orthogonal ausgerichtet sind. Die Hälfte der Summe der Intensitäten der den dem Ort 38 benachbarten Orten 42 und 44 entsprechenden, durch die Polarisationsfilter 46 und 48 gebildeten Strahlungsanteile mit der zweiten Polarisationsrichtung stellt einen durch Interpolation gewonnener Schätzwert für die Intensität des entsprechenden Polarisationsanteils der Messstrahlung am Ort 38, d.h. eine interpolierte Intensität für einen entsprechenden Anteil der Messstrahlung von dem Ort bzw. Bereich 38 mit der zweiten Polarisationsrichtung dar. Hierzu weist die Auswerteeinrichtung 30 eine in den Figuren nicht gezeigte Summationseinrichtung auf.

Zur Bestimmung der Lage der Polarisationsebene im Bereich bzw. Ort 38 wird von der Intensität des dem Bereich bzw. Ort 38 auf der Oberfläche 12 entsprechenden Strahlungsanteils mit der ersten Polarisationsrichtung, der durch Filterung durch den Polarisationsfilter 40 entstanden ist, interpolierte Intensität der dem Bereich 38 entsprechenden Messstrahlung mit der zweiten Polarisationsrichtung, d.h. im Beispiel die Hälfte der Summe der Intensitäten der den zu dem Ort 38 benachbarten Orten 42 und 44 entsprechenden, durch die Polarisationsfilter 46 bzw. 48 gefilterten Strahlungsanteile, subtrahiert. Diese Differenz wird durch die ermittelte Intensität geteilt, so dass die resultierende Lagegröße Werte zwischen 1 und -1 annehmen kann. Sie bildet je nach Polarisationsrichtung damit ein Maß für den Winkel, den die Polarisationsrichtung mit einer Geraden durch die Orte 40, 38 und 44 bzw. mit einer der Polarisationsrichtungen der Polarisationsfilter 34 bzw. 34' bildet. Die so gebildete Lagegröße ist sehr einfach zu ermitteln und ist eine eindeutige, streng monotone Funktion des genannten Winkels.

Zur Durchführung dieser Schritte weist die Auswerteeinrichtung 30 entsprechende digitale Teilschaltungen sowie eine in den Figuren nicht gezeigte Interpolationseinrichtung auf.

Soll der genannte Winkel direkt bestimmt werden, so kann dieser auch dadurch bestimmt werden, dass man ausnutzt, dass die Quadratwurzel aus dem Verhältnis der dem Ort 38 entsprechenden Intensität des durch Filterung gebildeten Strahlungsanteils erster Polarisationsrichtung zu der gemittelten Summe der den Orten 42 und 44 entsprechenden Intensitäten der durch Filterung gebildeten Strahlungsanteile bzw. allgemein der durch Interpolation gewonnenen Intensität mit der zweiten Polarisationsrichtung dem Tangens bzw. Kotangens des eingeschlossenen Winkels entspricht.

In der Auswertevorrichtung 30 ist eine Vergleichseinrichtung (in den Figuren nicht gezeigt) vorgesehen, die die so erfassten Werte für die Lage der Polarisationsebene und die Intensitäten der Messstrahlung an der Oberfläche 12 als Funktion des Ortes mit in der Vergleichseinrichtung gespeicherten Vergleichsdaten eines Gutmusters vergleicht und bei Abweichungen, die jeweils vorgegebene Schwellwerte betragsmäßig überschreiten, ein entsprechendes Warnsignal ausgibt.

In Fig. 3 ist ein Ausschnitt aus einer Polarisationsfilteranordnung 50 einer Vorrichtung zur Untersuchung einer Oberfläche oder einer Schicht nach einer zweiten bevorzugten Ausführungsform der Erfindung gezeigt, die sich ansonsten nur durch die Ausbildung der Auswerteeinrichtung von der Vorrichtung in Fig. 1 unterscheidet.

Die Polarisationsfilteranordnung 50 weist nun ein schachbrettartiges Muster von Polarisationsfiltern 52 auf, die jeweils, wie durch eine Schraffur angedeutet, einfallende optische Strahlung linear polarisieren. Zwischen diesen Polarisationsfiltern 52 liegen Bereiche 54, in denen eine polarisationsabhängige Filterung der auf die Polarisationsfilteranordnung 50 auftreffenden optischen Strahlung nicht stattfindet. Die Polarisationsfilteranordnung 50 kann, wie in dem vorhergehenden Ausführungsbeispiel in Form von metallischen Gittern mit Gitterabständen unterhalb der Wellenlänge der verwendeten Strahlung gegeben sein.

Die Auswerteeinrichtung dieses Ausführungsbeispiels unterscheidet sich von der Auswerteeinrichtung 30 dadurch, dass nun zur Bestimmung der Intensität und der Lage der Polarisationsebene der Messstrahlung um einen dem Bereich bzw. Ort 38 entsprechenden Polarisationsfilter 56 benachbarten Felder der Polarisationsfilteranordnung 50 verwendet werden. Es wird also ein 3 x 3-Block von durch die Polarisationsfilteranordnung 50 gebildeten Teilstrahlen verwendet, wobei im Beispiel des Bereichs bzw. Ortes 38 fünf Teilbündel linear entsprechend der Polarisationsrichtung der Polarisationsfilter 56 polarisiert sind, während die verbleibenden vier Teilbündel unverändert sind. Aus der wiederum durch Mittelung über die neun Intensitäten der durch Filterung entstandenen Teilbündel gebildeten Intensität der Messstrahlung für den Bereich bzw. Ort 38 auf der Oberfläche 12 und der erfassten Intensität des durch den Polarisationsfilter 56 gebildeten räumlich verschiedenen Strahlungsanteils sowie einer interpolierten Intensität, die durch Interpolation der Intensitäten der räumlich verschiedenen Strahlungsanteile benachbarter Orte erhalten wurde, kann nun ebenfalls mittels bekannter Formeln über eine Differenzbildung und Division durch die Intensität der Messstrahlung eine der oben für die Ausrichtung der Polarisationsebene des Messstrahlenbündels an dem Ort 38 verwendete Lagegröße analoge Lagegröße ermittelt werden.

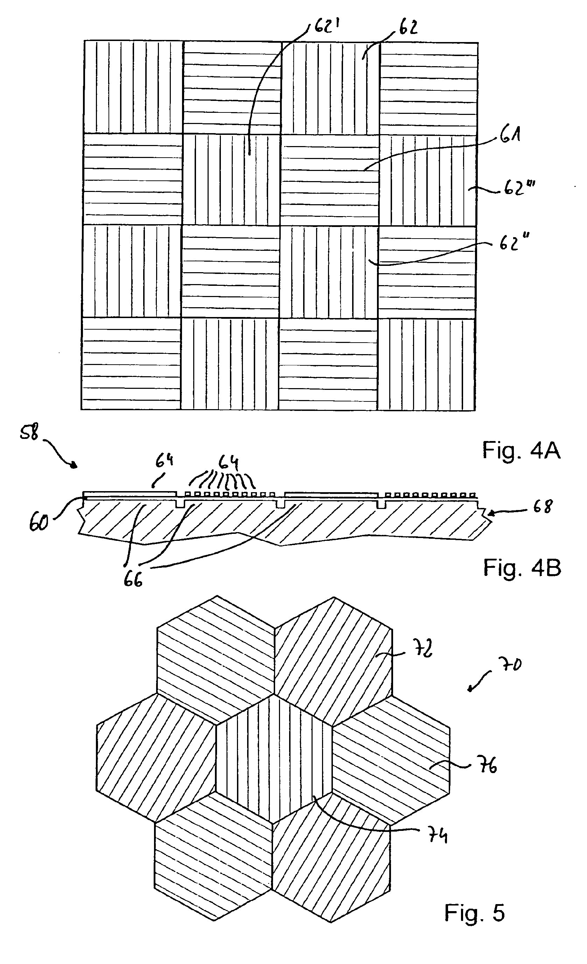

Wie in Fig. 4A und 4B für eine dritte Ausführungsform im Schnitt gezeigt, sind die Polarisationsfilter bildenden Polarisatorbereiche, von denen in Fig. 4A einige mit den Bezugszeichen 61, 62, 62', 62" und 62''' gekennzeichnet sind, mit der Oberfläche des Feldes 24 von Photodetektionselementen 66, das heißt des CCD-Chips 68, verbunden. Das Feld 24 von Photodetektionselementen und die Polarisationsfilteranordnung 28 sind zu einem Sensor 58 zusammengefasst. Die Polarisatorbereiche bzw. Polarisationsfilter sind durch Strukturen von parallel zueinander verlaufenden metallischen Streifen 64 mit einem Abstand unterhalb der Wellenlänge des Beleuchtungsstrahlenbündels gebildet. Sie sind dabei schachbrettartig angeordnet, wobei die parallelen Streifen und damit die dazu orthogonal verlaufenden Polarisationsrichtungen nächst benachbarter Polarisationsfilter jeweils orthogonal zueinander ausgerichtet sind. Die metallischen Streifen 64 sind dabei nach Herstellung einer Isolationsschicht 60 auf den photoempfindlichen Oberflächen der Photodetektionselemente 66 durch lithografische Verfahren, wie sie in der Mikroelektronik üblich sind, auf die Oberfläche der mit den Photodetektionselementen 66 verbundenen Schicht 60 aufgebracht. Um diese Struktur zu schützen, kann in einem anderen Ausführungsbeispiel die genannte Struktur durch eine weitere dielektrische Schicht abgedeckt sein.

Auf diese Weise wird eine perfekte Justierung der Polarisationsfilter zu den Photodetektionselementen 66 erzielt.

Die ortsabhängige Ermittlung der Intensität der Messstrahlung kann nun wie im zweiten Ausführungsbeispiel erfolgen. Die Ermittlung der Lage der Polarisationsebene kann in diesem Ausführungsbeispiel analog zu dem Ausführungsbeispiel dadurch erfolgen, dass die Intensität des dem Ort 38 auf der Oberfläche 12 entsprechenden, durch den Polarisationsfilter 61 gebildeten Strahlungsanteils von dem Mittelwert der umliegenden, nächst benachbarten Polarisationsfilter 62, 62', 62" und 62''', der als durch Interpolation gewonnener Schätzwert für die Intensität des Strahlungsanteils angesehen werden kann, der durch den Polarisationsfilter 61 aufgrund der anderen Polarisationsrichtung herausgefiltert wurde, abgezogen und das Resultat durch die Gesamtintensität geteilt wird. Es ergibt sich so wieder eine Größe, die wie im ersten Ausführungsbeispiel entsprechend der Ausrichtung der Polarisationsebene an der Oberfläche 12 relativ zu den Polarisationsfiltern Werte zwischen -1 und 1 annehmen kann.

Einen Ausschnitt aus einer Polarisationsfilteranordnung 70 einer Vorrichtung nach einer vierten bevorzugten Ausführungsform der Erfindung ist in Fig. 5 gezeigt und weist eine hexagonale Anordnung von sechseckigen Polarisationsfiltern 72, 74 und 76 auf, jeweils um 120° zueinander geneigte Polarisationsrichtungen aufweisen. Die Auswerteeinrichtung, die der Auswerteeinrichtung 30 in dem ersten Ausführungsbeispiel entspricht, ist hier entsprechend modifiziert, so dass wiederum die Gesamtintensität und Differenzen von Intensitäten von Strahlungsanteilen hinter den Polarisationsfiltern 72, 74 bzw. 76 als Maß für die Lage der Polarisationsebene ermittelt werden.

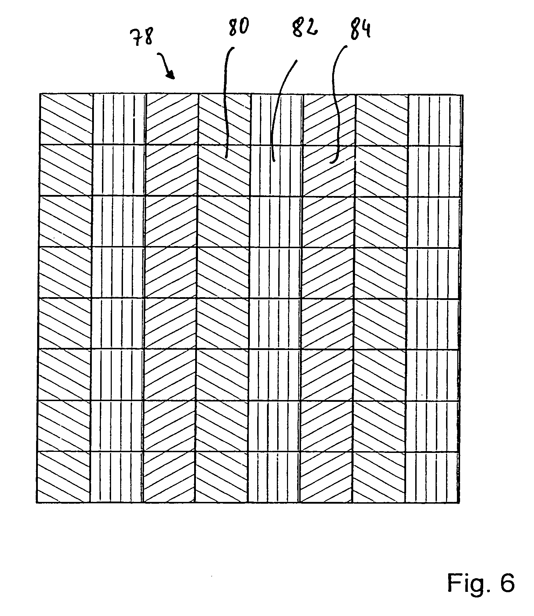

Einen Ausschnitt aus einer Polarisationsfilteranordnung 78 einer Vorrichtung nach einer fünften bevorzugten Ausführungsform der Erfindung ist in Fig. 6 gezeigt und weist eine streifenförmige Anordnung von Polarisationsfiltern 80, 82 und 84 auf, die jeweils um 120° zueinander geneigte Polarisationsrichtungen aufweisen. Die Auswerteeinrichtung, die der Auswerteeinrichtung 30 in dem ersten Ausführungsbeispiel entspricht, ist hier entsprechend modifiziert. Bezeichnen $e_i$ für i=1, 2, 3 Einheitsvektoren in den drei verschiedenen Polarisationsrichtungen der Polarisationsfilter, so kann die Gesamtintensität I der zurückgeworfenen optischen Strahlung auf der Basis der von den quer zur Streifenrichtung benachbarten Polarisationsfiltern 80, 82 und 84 transmittierten und von den entsprechenden Photodetektionselementen erfassten Intensitäten $I_i$ für i=1, 2, 3 anhand der folgenden Formel ermittelt werden:

$$I = \sum_{i,j=1}^{3} \sqrt{I_i I_j}\,(e_i e_j).$$

Dabei bezeichnet $(e_i e_j)$ das Skalarprodukt der Vektoren $e_i$ und $e_j$.

Der Winkel $\delta$, den die Polarisationsebene der zurückgeworfenen optischen Strahlung mit der Polarisationsrichtung $e_1$ einschließt, kann beispielsweise folgendermaßen ermittelt werden:

$$\cos\delta = \frac{\sqrt{I_1} + \sqrt{I_2}\,(e_1 e_2) + \sqrt{I_3}\,(e_1 e_3)}{\sqrt{I}}.$$

Bei beiden Formeln wird davon ausgegangen, dass die von einem Photodetektionselement für den Ort eines Polarisationsfilters erfasste Intensität, beispielsweise von dem Photodetektionselements für den Polarisationsfilter 80, auf den Ort des benachbarten Polarisationsfilters, beispielsweise des Polarisationsfilters 82, extrapolierbar ist, indem der gleiche Wert auch an diesem Ort angenommen wird.

Soll nur ein Vergleich mit einem Gutmuster durchgeführt werden, können auch Funktionen des Winkels $\delta$ verwendet werden, die einfacher aus den Intensitäten $I_i$ ermittelbar sind.

Bei einer Vorrichtung nach einer sechsten bevorzugten Ausführungsform der Erfindung wird statt des CCD-Sensors im ersten Ausführungsbeispiel ein dreikanaliger Farb-CCD-Sensor verwendet, wobei jeweils benachbarte Sensorelemente mit verschiedenen Farben die Intensität eines einzelnen durch einen Polarisationsfilter gebildeten Strahlungsanteils erfassen. Die Auswerteeinrichtung ermittelt nun die Intensitäten und die Lage der Polarisationsebene des Messstrahlenbündels an einem Ort auf der Oberfläche 16 für jeden der von den verschiedenen Sensorelementen erfassten Spektralbereiche bzw. Kanäle getrennt.

Bezugszeichenliste

| 10 | Vorrichtung zur Oberflächenuntersuchung |
|----|----|
| 12 | Oberfläche |
| 14 | Gegenstand |
| 16 | Quelle für optische Strahlung |
| 18 | Beleuchtungsstrahlenbündel |
| 20 | Beleuchtungsoptik |
| 22 | Kamera |
| 24 | Feld von Photodetektionselementen |
| 26 | Erfassungsoptik |
| 28 | Polarisationsfilteranordnung |
| 30 | Auswerteeinrichtung |
| 32, 32' | Polarisationsfilterstreifen |
| 34, 34' | Polarisationsfilter |
| 36 | Messstrahlenbündel |
| 38 | Bereich der Oberfläche |

| | |
|---|---|
| 40 | Polarisationsfilter |
| 42 | Bereich der Oberfläche |
| 44 | Bereich der Oberfläche |
| 46 | Polarisationsfilter |
| 48 | Polarisationsfilter |
| 50 | Polarisationsfilteranordnung |
| 52 | Polarisationsfilter |
| 54 | nicht filternder Bereich |
| 56 | Polarisationsfilter |
| 58 | Sensor |
| 60 | Isolationsschicht |
| 61 | Polarisationsfilter |
| 62, 62', 62'', 62''' | Polarisationsfilter |
| 64 | Streifen |
| 66 | Photodetektionselement |
| 68 | CCD-Chip |
| 70 | Polarisationsfilteranordnung |
| 72 | Polarisationsfilter |
| 74 | Polarisationsfilter |
| 76 | Polarisationsfilter |
| 78 | Polarisationsfilteranordnung |
| 80 | Polarisationsfilter |
| 82 | Polarisationsfilter |
| 84 | Polarisationsfilter |

**Patentansprüche**

1. Vorrichtung zur Untersuchung einer Oberfläche (12) oder einer Schicht, mit

   einer Quelle (16) für polarisierte optische Strahlung zur Abgabe von Beleuchtungsstrahlung (18) auf die Oberfläche (12) oder Schicht, und

   einer Detektionseinrichtung zur im wesentlichen gleichzeitigen ortsaufgelösten Erfassung wenigstens einer Polarisationseigenschaft der von der Oberfläche (12) als Messstrahlung (36) zurückgeworfenen bzw. von der Schicht als Messstrahlung (36) abgegebenen optischen Strahlung, wobei

   die Detektionseinrichtung ein Feld (24; 68) von Photodetektionselementen (66),

   eine im Strahlengang der Messstrahlung (36) vor den Photodetektionselementen (66) angeordnete Anordnung (28; 50; 70; 78) von Polarisationsfiltern (34, 34', 40, 46, 48; 52; 61, 62, 62', 62'', 62'''; 72, 74, 76; 80, 82, 84), mittels derer die Messstrahlung (36) unter Bildung von der Anordnung der Polarisationsfilter (34, 34', 40, 46, 48; 52; 61, 62, 62', 62'', 62'''; 72, 74, 76; 80, 82, 84) entsprechend räumlich verschiedenen Strahlungsanteilen mit unterschiedlichem Polarisationszustand filterbar ist, und

   eine Auswerteeinrichtung (30), mittels derer aus Signalen der Photodetektionselemente (66) in Abhängigkeit von der Lage der Polarisationsfilter (34, 34', 40, 46, 48; 52; 61, 62, 62', 62'', 62'''; 72, 74, 76; 80, 82, 84) der Polarisationsfilteranordnung (28; 50; 70; 78) relativ zueinander, zu den Photodetektionselementen (66) und der Oberfläche (12) bzw. Schicht lokal aufgelöst die Polarisationseigenschaft der Messstrahlung für verschiedene Orte (38) auf der Oberfläche (12) bzw. in der Schicht ermittelbar ist, umfasst,
   **dadurch gekennzeichnet, dass**

   - eine Vergleichseinrichtung vorgesehen ist, in der für die Polarisationseigenschaft entsprechende Soll-Eigenschaften bzw. - werte für die Oberfläche (12) bzw. Schicht speicherbar sind und mittels derer die erfasste Polarisationseigenschaft mit den entsprechenden vorgegebenen Soll-Eigenschaften bzw. - werten vergleichbar und dem Vergleichsergebnis entsprechende Signale bildbar sind,
   - wenigstens einer der Polarisationsfilter (34, 34', 40, 46, 48; 52; 61, 62, 62', 62'', 62'''; 72, 74, 76; 80, 82, 84) eine für wenigstens eine Wellenlänge im Bereich der durch die Photodetektionselemente (66) erfassbaren optischen Strahlung oder der Beleuchtungsstrahlung (18) polarisierend wirkende Struktur (32, 32'; 64) aus Metall umfasst, und
   - die polarisierend wirkenden Strukturen (32, 32'; 64) auf einer Oberfläche der Photodetektionselemente (66) unmittelbar aufgebracht sind.

**2.** Vorrichtung nach Anspruch 1,
**dadurch gekennzeichnet,**
**dass** die Detektionseinrichtung zur Erfassung der Intensität der Messstrahlung (36) in Abhängigkeit von dem Ort (38) auf der Oberfläche (12) bzw. in der Schicht und/oder zur spektral aufgelösten Erfassung der Messstrahlung (36) in Abhängigkeit von dem Ort (38) auf der Oberfläche (12) bzw. in der Schicht ausgebildet ist.

**3.** Vorrichtung nach Anspruch 2,
**gekenntzeichnet** durch
eine Vergleichseinrichtung, in der für die Intensitäten und/oder die spektralen Eigenschaften entsprechende Soll-Eigenschaften bzw. - Werte für die Oberfläche (12) bzw. Schicht speicherbar sind, und mittels derer die erfassten Intensitäten und/oder die spektralen Eigenschaften mit den entsprechenden vorgegebenen Soll-Eigenschaften bzw. -Werten vergleichbar und dem Vergleichsergebnis entsprechende Signale bildbar sind.

**4.** Vorrichtung nach einem der Ansprüche 1 bis 3,
**dadurch gekennzeichnet,**
**dass** die Polarisationsfilter (34, 34', 40, 46, 48; 52; 61, 62, 62', 62", 62'''; 72, 74, 76; 80, 82, 84) in einer Fläche quer zu der mittleren Ausbreitungsrichtung der Messstrahlung (36) und benachbart zu dem Feld (24; 68) der Photodetektionselemente (66) angeordnet sind.

**5.** Vorrichtung nach einem der Ansprüche 1 bis 4,
**dadurch gekennzeichnet,**
**dass** die Auswerteeinrichtung (30) eine Summationseinrichtung zur Summation von Intensitäten aufweist, die von Photodetektionselementen (66) erfasst sind, mittels derer räumlich verschiedene Strahlungsanteile empfangbar sind, die benachbarten Orten (42, 44) auf der Oberfläche (12) bzw. in der Schicht entsprechen und einen unterschiedlichen Polarisationszustand besitzen.

**6.** Vorrichtung nach einem der Ansprüche 1 bis 5,
**dadurch gekennzeichnet,**
**dass** die Polarisationsfilter (34, 34', 40, 46, 48; 61, 62, 62', 62", 62'''; 72, 74, 76; 80, 82, 84) auf einer Fläche angeordnet sind, wobei zu wenigstens einem Polarisationsfilter (34, 34', 40, 46, 48; 61, 62, 62', 62", 62'''; 72, 74, 76; 80, 82, 84) mit einer ersten Polarisationsrichtung jeweils wenigstens ein Polarisationsfilter (34, 34', 40, 46, 48; 61, 62, 62', 62", 62'''; 72, 74, 76; 80, 82, 84) mit einer von der ersten Polarisationsrichtung abweichenden zweiten Polarisationsrichtung benachbart ist.

**7.** Vorrichtung nach einem der Ansprüche 1 bis 6,
**dadurch gekennzeichnet,**
**dass** die Polarisationsfilteranordnung (28; 50; 70) Polarisationsfilter (34, 34', 40, 46, 48; 61, 62, 62', 62", 62'''; 72, 74, 76) mit zueinander orthogonalen Polarisationsrichtungen aufweist, und/oder dass die Polarisationsfilteranordnung (78) für wenigstens einen Polarisationsfilter (80, 82, 84) mit einer ersten Polarisationsrichtung wenigstens zwei weitere zu diesem benachbarte Polarisationsfilter (80, 82, 84) mit voneinander abweichenden Polarisationsrichtungen aufweist, deren Polarisationsrichtungen mit der ersten Polarisationsrichtung einen von 90° abweichenden Winkel einschließen.

**8.** Vorrichtung nach einem der Ansprüche 1 bis 7,
**dadurch gekennzeichnet,**
**dass** die Polarisationsfilter (34, 34', 40, 46, 48; 52; 61, 62, 62', 62", 62'''; 72, 74, 76; 80, 82, 84) regelmäßig angeordnet sind und/oder dass die Polarisationsfilteranordnung diffraktiv polarisierende Elemente umfasst.

**9.** Vorrichtung nach einem der Ansprüche 1 bis 8,
**dadurch gekennzeichnet,**
**dass** die Größe von Öffnungen zwischen oder in Elementen der Struktur (32, 32'; 64) kleiner als das Doppelte einer Wellenlänge im Bereich der durch die Photodetektionselemente (66) erfassbaren optischen Strahlung oder der Beleuchtungsstrahlung (18) ist.

**10.** Vorrichtung nach Anspruch 9,
**dadurch gekennzeichnet,**
**dass** die Größe von Öffnungen zwischen oder in den Elementen der Struktur (32, 32', 64) kleiner als eine Wellenlänge im Bereich der durch die Photodetektionselemente (66) erfassbaren optischen Strahlung oder der Beleuchtungsstrahlung (18) ist

**11.** Vorrichtung nach einem der Ansprüche 1 bis 10,
**dadurch gekennzeichnet,**
**dass** die Struktur parallele Streifen (32, 32'; 64) umfasst.

**12.** Vorrichtung nach einem der Ansprüche 1 bis 11,
**dadurch gekennzeichnet,**
**dass** das Feld von Photodetektionselementen zur wenigstens zweikanaligen Detektion von optischer Strahlung ausgebildet ist, wobei jeder Kanal einem von wenigstens zwei sich nicht oder nur teilweise überlappenden Wellenlängenbereichen entspricht.

**13.** Vorrichtung nach einem der Ansprüche 1 bis 12,
**dadurch gekennzeichnet,**
**dass** im Messstrahlengang zwischen der Oberfläche und der Polarisationsfilteranordnung eine für eine zur Unter- suchung verwendete Wellenlänge ausgelegte Viertelwellenplatte angeordnet ist.

**14.** Vorrichtung nach einem der Ansprüche 1 bis 13,
**dadurch gekennzeichnet,**
**dass** der Beleuchtungs- und der Messstrahlengang in einem Abschnitt koaxial verlaufen.


**Claims**

**1.** An apparatus for inspecting a surface (12) or a layer, comprising a source (16) for polarised optical radiation for outputting illumination radiation (18) onto the surface (12) or layer; and
a detection device for the substantially simultaneous spatially resolved detection of at least one polarisation property of the optical radiation reflected back from the surface (12) as measured radiation (36) or output by the layer as measured radiation (36), wherein the detection device includes a field (24; 68) of photodetection elements (66);
an arrangement (28; 50; 70; 78) of polarisation detection filters (34, 34', 40, 46, 48; 52; 61, 62, 62', 62", 62"'; 72, 74, 76; 80, 82, 84) arranged before the photodetection elements (66) in the beam path of the measured radiation (36) by means of which polarisation detection filters the measured radiation (36) can be filtered while forming radiation portions having a different state of polarisation and differing corresponding spatially from the arrangement of the polarisation filters (34, 34', 40, 46, 48; 52; 61, 62, 62', 62", 62"'; 72, 74, 76; 80, 82, 84); and
an evaluation device (30), by means of which the polarisation property of the measured radiation can be determined with local resolution for different locations (38) on the surface (12) or in the layer from signals of the photodetection elements (66) in dependence on the position of the polarisation filters (34, 34', 40, 46, 48; 52; 61, 62, 62', 62", 62"'; 72, 74, 76; 80, 82, 84) of the polarisation filter arrangement (28; 50; 70; 78) relative to one another, to the photodetection elements (66) and to the surface (12) or layer, **characterised in that**

- a comparator is provided in which corresponding desired properties or desired values for the surface (12) or layer can be stored for the polarisation property and by means of which the detected polarisation property having the corresponding predefined desired properties or desired values can be compared and signals corresponding to the comparison result can be formed;
- at least one of the polarisation filters (34, 34', 40, 46, 48; 52; 61, 62, 62', 62", 62"'; 72, 74, 76; 80, 82, 84) includes a structure (32, 32'; 64) of metal having a polarising effect for at least one wavelength in the range of the optical radiation detectable by the photodetection elements (66) or in the range of the illumination radiation (18); and
- the structures (32, 32'; 64) of polarising effect are applied directly to a surface of the photodetection elements (66).

**2.** An apparatus in accordance with claim 1,
**characterised in that**
the detection device is designed for detecting the intensity of the measured radiation (36) in dependence on the location (38) on the surface (12) or in the layer and/or for the spectrally resolved detection of the measured radiation (36) in dependence on the location (38) on the surface (12) or in the layer.

**3.** An apparatus in accordance with claim 2,

**characterised by**
a comparator in which corresponding desired properties or desired values for the surface (12) or for the layer can be stored for the intensities and/or the spectral properties; and
by means of which the detected intensities and/or the spectral properties can be compared with the corresponding predefined desired properties or desired values and signals corresponding to the comparison result can be formed.

4. An apparatus in accordance with any one of the claims 1 to 3,
**characterised in that**
the polarisation filters (34, 34', 40, 46, 48; 52; 61, 62, 62', 62", 62'''; 72, 74, 76; 80, 82, 84) are arranged in a surface transverse to the central direction of propagation of the measured radiation (36) and adjacent to the field (24; 68) of the photodetection elements (66).

5. An apparatus in accordance with any one of the claims 1 to 4,
**characterised in that**
the evaluation device (30) has a summation device for summing intensities which are detected by photodetection elements (66) by means of which spatially different radiation portions can be received which correspond to adjacent locations (42, 44) on the surface (12) or in the layer and have a different state of polarisation.

6. An apparatus in accordance with any one of the claims 1 to 5,
**characterised in that**
the polarisation filters (34, 34', 40, 46, 48; 52; 61, 62, 62', 62", 62'''; 72, 74, 76; 80, 82, 84) are arranged on a surface, with a respective at least one polarisation filter (34, 34', 40, 46, 48; 52; 61, 62, 62', 62", 62'''; 72, 74, 76; 80, 82, 84) having a second polarisation direction different from the first polarisation direction being adjacent to at least one polarisation filter (34, 34', 40, 46, 48; 52; 61, 62, 62', 62", 62'''; 72, 74, 76; 80, 82, 84) having a first polarisation direction.

7. An apparatus in accordance with any one of the claims 1 to 6,
**characterised in that**
the polarisation filter arrangement (28; 50; 70) has polarisation filters (34, 34', 40, 46, 48; 52; 61, 62, 62', 62", 62'''; 72, 74, 76) having mutually orthogonal polarisation directions; and/or
**in that** the polarisation filter arrangement (78) for at least one polarisation filter (80, 82, 84) has a first polarisation direction has at least two further polarisation filters (80, 82, 84) adjacent thereto and with mutually different polarisation directions whose polarisation directions include an angle different from 90° with the first polarisation direction.

8. An apparatus in accordance with any one of the claims 1 to 7,
**characterised in that**
the polarisation filters (34, 34', 40, 46, 48; 52; 61, 62, 62', 62", 62'''; 72, 74, 76; 80, 82, 84) are arranged regularly; and/or
**in that** the polarisation filter arrangement includes diffractively polarising elements.

9. An apparatus in accordance with any one of the claims 1 to 8,
**characterised in that**
the size of openings between or in elements of the structure (32, 32'; 64) is smaller than twice a wavelength in the range of the optical radiation detectable by the photodetection elements (66) or of the illumination radiation (18).

10. An apparatus in accordance with claim 9,
**characterised in that**
the size of openings between or in elements of the structure (32, 32'; 64) is smaller than a wavelength in the range of the optical radiation detectable by the photodetection elements (66) or of the illumination radiation (18).

11. An apparatus in accordance with any one of the claims 1 to 10,
**characterised in that**
the structure includes parallel strips (32, 32', 64).

12. An apparatus in accordance with any one of the claims 1 to 11,
**characterised in that**
the field of photodetection elements is designed for the at least two-channel detection of optical radiation, with each channel corresponding to one of at least two wavelength ranges which do not overlap or which only overlap partly.

13. An apparatus in accordance with any one of the claims 1 to 12,

**characterised in that**

a quarter-wave plate designed for a wavelength used for the inspection is arranged between the surface and the polarisation filter arrangement in the measurement beam path.

**14.** An apparatus in accordance with any one of the claims 1 to 13,
**characterised in that**
the illumination beam path and the measurement beam path extend coaxially in a section.

**Revendications**

**1.** Dispositif pour l'inspection d'une surface (12) ou d'une couche, comprenant
une source (16) pour un rayonnement optique polarisé, destinée à envoyer un rayonnement d'éclairage (18) sur la surface (12) ou la couche, et
un système de détection pour détecter sensiblement simultanément et avec résolution locale au moins une propriété de polarisation du rayonnement optique renvoyé par la surface (12) à titre de rayonnement de mesure (36), ou envoyé par la couche à titre de rayonnement de mesure (36), dans lequel
le système de détection comprend un champ (24 ; 68) d'éléments photodétecteurs (66),
un agencement (28 ; 50 ; 70 ; 78), agencé dans le trajet des rayons du rayonnement de mesure (36) devant les éléments photodétecteurs (66), de filtres de polarisation (34, 34', 40, 46, 48 ; 52 ; 61, 62, 62', 62", 62''' ; 72, 74, 76 ; 80, 82, 84), au moyen desquels le rayonnement de mesure (36) est susceptible d'être filtré en formant des parts de rayonnement différentes dans l'espace en correspondance de l'agencement des filtres de polarisation (34, 34', 40, 46, 48 ; 52 ; 61, 62, 62', 62", 62''' ; 72, 74, 76 ; 80, 82, 84), avec des états de polarisation différents, et
un système d'évaluation (30), au moyen duquel la propriété de polarisation du rayonnement de mesure est susceptible d'être déterminée, à partir des signaux des éléments photodétecteurs (66) en fonction de la position des filtres de polarisation (34, 34', 40, 46, 48 ; 52 ; 61, 62, 62', 62", 62''' ; 72, 74, 76 ; 80, 82, 84) de l'agencement de filtres de polarisation (28 ; 50 ; 70 ; 78) les uns par rapport aux autres, avec résolution locale par rapport aux éléments photodétecteurs (66) et à la surface (12) ou à la couche, pour différents emplacements (18) sur la surface (12) ou dans la couche,
**caractérisé en ce que**

- il est prévu un moyen de comparaison dans lequel des propriétés ou des valeurs de consigne, correspondantes pour la propriété de polarisation, peuvent être mémorisées pour la surface (12) ou pour la couche, et au moyen desquelles la propriété de polarisation détectée peut être comparée avec les propriétés ou les valeurs de consigne correspondantes prédéterminées et des signaux correspondant au résultat de comparaison peuvent être formés,
- l'un au moins des filtres de polarisation (34, 34', 40, 46, 48 ; 52 ; 61, 62, 62', 62", 62''' ; 72, 74, 76 ; 80, 82, 84) comprend une structure (32, 32'; 64) en métal à effet polarisant pour au moins une longueur d'onde dans la zone du rayonnement optique ou du rayonnement d'éclairage (18) susceptible d'être détecté par les éléments photodétecteurs (66), et
- les structures à effet polarisant (32, 32'; 64) sont appliquées directement sur une surface des éléments photodétecteurs (66).

**2.** Dispositif selon la revendication 1,
**caractérisé en ce que**
le système de détection est réalisé pour détecter l'intensité du rayonnement de mesure (36) en fonction de l'emplacement (38) sur la surface (12) ou dans la couche, et/ou pour la détection avec résolution locale du rayonnement de mesure (36) en fonction de l'emplacement (38) sur la surface (12) ou dans la couche.

**3.** Dispositif selon la revendication 2,
**caractérisé**
**par** un moyen de comparaison dans lequel peuvent être mémorisées des propriétés ou des valeurs de consigne, correspondant pour les intensités et/ou les propriétés spectrales, pour la surface (12) ou pour la couche, et au moyen desquelles les intensités détectées et/ou les propriétés spectrales détectées peuvent être comparées aux propriétés ou aux valeurs de consigne correspondantes prédéterminées, et des signaux correspondants au résultat de comparaison peuvent être formés.

**4.** Dispositif selon l'une des revendications 1 à 3,

**caractérisé en ce que** les filtres de polarisation (34, 34', 40, 46, 48 ; 52 ; 61, 62, 62', 62", 62''' ; 72, 74, 76 ; 80, 82, 84) sont agencés dans une surface perpendiculaire à la direction de propagation moyenne du rayonnement de mesure (37), et sont agencées au voisinage du champ (24 ; 68) des éléments photodétecteurs (66).

5. Dispositif selon l'une des revendications 1 à 4,
**caractérisé en ce que** le système d'évaluation (30) comprend un moyen de sommation pour la sommation d'intensités qui sont détectées par les éléments photodétecteurs (66), au moyen desquels différentes parts de rayonnement dans l'espace peuvent être reçues, qui correspondent à des emplacements voisins (42, 44) sur la surface (12) ou dans la couche, et qui possèdent un état de polarisation différent.

6. Dispositif selon l'une des revendications 1 à 5,
**caractérisé en ce que** les filtres de polarisation (34, 34', 40, 46, 48 ; 52 ; 61, 62, 62', 62", 62''' ; 72, 74, 76 ; 80, 82, 84) sont agencés sur une surface, et au moins un filtre de polarisation (34, 34', 40, 46, 48 ; 52 ; 61, 62, 62', 62", 62''' ; 72, 74, 76 ; 80, 82, 84) avec une première direction de polarisation a respectivement comme voisin un filtre de polarisation (34, 34', 40, 46, 48 ; 52 ; 61, 62, 62', 62", 62''' ; 72, 74, 76 ; 80, 82, 84) avec une seconde direction de polarisation différente de la première direction de polarisation.

7. Dispositif selon l'une des revendications 1 à 6,
**caractérisé en ce que** l'agencement de filtres de polarisation (28 ; 50 ; 70) comprend des filtres de polarisation (34, 34', 40, 46, 48 ; 52 ; 61, 62, 62', 62", 62''' ; 72, 74, 76) avec des directions de polarisation mutuellement orthogonales, et/ou **en ce que** l'agencement de filtres de polarisation (78) comprend, pour au moins un filtre de polarisation (80, 82, 84) avec une première direction de polarisation, au moins deux autres filtres de polarisation (80, 82, 84) voisins de celui-ci, avec des directions de polarisation différentes l'une de l'autre, dont les directions de polarisation définissent avec la première direction de polarisation un angle différent de 90°.

8. Dispositif selon l'une des revendications 1 à 7,
**caractérisé en ce que** les filtres de polarisation (34, 34', 40, 46, 48 ; 52 ; 61, 62, 62', 62", 62''' ; 72, 74, 76 ; 80, 82, 84) sont agencées de manière régulière et/ou **en ce que** l'agencement de filtres de polarisation comprend des éléments polarisants par diffraction.

9. Dispositif selon l'une des revendications 1 à 8,
**caractérisé en ce que** la taille des ouvertures entre ou dans les éléments de la structure (32, 32'; 64) est inférieure au double d'une longueur d'onde dans la région du rayonnement optique ou du rayonnement d'éclairage (18) susceptible d'être détecté par les éléments photodétecteurs (66).

10. Dispositif selon la revendication 9,
**caractérisé en ce que** la taille des ouvertures entre ou dans les éléments de la structure (32, 32', 64) est inférieure à une longueur d'onde dans la région du rayonnement optique ou du rayonnement d'éclairage (18) susceptible d'être détecté par les éléments photodétecteurs (66).

11. Dispositif selon l'une des revendications 1 à 10,
**caractérisé en ce que** la structure comprend des bandes parallèles (32, 32'; 64).

12. Dispositif selon l'une des revendications 1 à 11,
**caractérisé en ce que** le champ d'éléments photodétecteurs est réalisé en vue d'une détection du rayonnement optique sur au moins deux canaux, chaque canal correspondant à une plage de longueurs d'onde parmi au moins deux plages de longueurs d'onde qui ne se chevauchent pas ou qui se chevauchent seulement partiellement.

13. Dispositif selon l'une des revendications 1 à 12,
**caractérisé en ce qu'**une plaque au quart de longueur d'onde, conçue pour une analyse des longueurs d'ondes utilisées, est agencée dans le trajet des rayons de mesure entre la surface et l'agencement de filtres de polarisation.

14. Dispositif selon l'une des revendications 1 à 13,
**caractérisé en ce que** le trajet des rayons d'éclairage et le trajet des rayons de mesure s'étendent coaxialement dans un tronçon.

Fig. 1

Fig. 2

Fig. 3

Fig. 4A

Fig. 4B

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5850284 A
- US 5828500 A
- JP 58009051 A
- JP 9178669 A
- EP 0987537 A